# EUROPEAN PATENT APPLICATION

(11) **EP 4 120 776 A1**
(43) Date of publication of application: **18.01.2023**
(21) Application number: 21785500.6
(22) Date of filing: 02.04.2021
(51) Int. Cl.: H04W 72/08

(54) **CELL ACTIVATION METHOD AND DEVICE**

(30) Priority: 10.04.2020 CN 202010281640
(71) Applicant: Huawei Technologies Co., Ltd., Shenzhen, Guangdong 518129, (CN)
(72) Inventor: ZHANG, Li, Shenzhen, Guangdong 518129 (CN); WEI, Jingxin, Shenzhen, Guangdong 518129 (CN); XUE, Jiantao, Shenzhen, Guangdong 518129 (CN); HAN, Jing, Shenzhen, Guangdong 518129 (CN)
(74) Representative: Maiwald GmbH
(86) International application number: PCT/CN2021/085388
(87) International publication number: WO 2021/204089

(57) **Abstract**

Embodiments of this application provide a cell activation method and an apparatus, and relate to the communication field. Timing information and beam information of a to-be-activated cell are obtained based on a known cell or an activated cell, to reduce cell search and beam measurement time in an activation process, and implement quick activation. A specific solution is as follows: A communication apparatus determines a serving cell that can perform information synchronization with a to-be-activated SCell, where the serving cell is an activated cell or a known cell; the communication apparatus determines a first SSB in SSBs sent by the to-be-activated SCell, where the first SSB corresponds to a second SSB sent by the serving cell; and the communication apparatus activates the to-be-activated SCell based on the first SSB sent by the to-be-activated SCell and timing information and beam information of the second SSB. Embodiments of this application are used in the cell activation process.

## Description

This application claims priority to Chinese Patent Application No. 202010281640.X, filed with the China National Intellectual Property Administration on April 10, 2020 and entitled "CELL ACTIVATION METHOD AND APPARATUS", which is incorporated herein by reference in its entirety.

### TECHNICAL FIELD

Embodiments of this application relate to the communications field, and in particular, to a cell activation method and an apparatus.

### BACKGROUND

In a 5th generation mobile networks (5th generation mobile networks, 5G) system, after entering a connected mode, a terminal device may communicate with a source network device simultaneously through a plurality of component carriers. The source network device specifies one primary component carrier (primary component carrier, PCC) for the terminal device through explicit configuration or as agreed upon in a protocol, and another component carrier is referred to as a secondary component carrier (secondary component carrier, SCC). A serving cell on the PCC is referred to as a primary cell (primary cell, PCell), and a serving cell on the SCC is referred to as a secondary cell (secondary cell, SCell).

A time requirement for the terminal device to complete SCell activation is related to whether the SCell is known or unknown to the terminal device. That the terminal device determines that the SCell is a known cell is: In a period of time before the terminal device receives an activation command of a network device, the terminal device performs radio resource management (Radio Resource Management, RRM) measurement on the SCell and reports a measurement result to the network device; otherwise, the terminal device considers that the SCell is an unknown cell. When activating the unknown SCell, the terminal device usually needs to first perform cell search, to obtain timing information, beam information, and the like of a to-be-activated SCell. However, in an FR2 band (band), if there is an activated serving cell or an inactive but known SCell, when activating the SCell, the terminal device may not perform cell search, but directly use timing information and beam information of the activated serving cell or the known SCell, to quickly activate the to-be-activated SCell. However, a prerequisite for the terminal device to use timing information or beam information of another serving cell is: It is ensured that all serving cells in the FR2 band are synchronized and co-located and have a same transmit beam on a same orthogonal frequency division multiplexing (orthogonal frequency division multiplexing, OFDM) symbol.

However, even if a plurality of cells have a same transmit beam on a same SSB, there is still a case in which the plurality of cells have different SSB patterns (patterns) (SSB pattern: a set of SSBs sent by one cell are represented by bit sequences (ssb-PositionsInBurst) corresponding to identifiers of all SSBs sent by the cell in a standard for an NR system; that SSB patterns are the same is that two cells send SSBs with a same identifier). Consequently, if the terminal device determines to perform an activation action with reference to beam information and timing information of an SSB of an activated or known cell, and a to-be-activated cell does not send the SSB at a location of a symbol of the SSB, the terminal device cannot determine a specific SSB for activation in the to-be-activated SCell.

### SUMMARY

Embodiments of this application provide a cell activation method and an apparatus. Timing information and beam information of a to-be-activated cell are obtained based on an activated cell, to reduce cell search and beam measurement time in an activation process, and implement quick activation.

To achieve the foregoing objectives, the following technical solutions are used in embodiments of this application.

According to a first aspect, a cell activation method is provided. The method includes: A communication apparatus determines a serving cell that can perform information synchronization with a to-be-activated secondary cell SCell, where the serving cell is an activated cell or a known cell; the communication apparatus determines a first SSB in SSBs sent by the to-be-activated SCell, where the first SSB corresponds to a second SSB sent by the serving cell; and the communication apparatus activates the to-be-activated SCell based on the first SSB sent by the to-be-activated SCell and timing information and beam information of the second SSB. For example, the communication apparatus may be UE, and a network device may be a base station.

In this embodiment of this application, the UE may determine, according to a predefinition in a standard or a network indication, the serving cell that can perform information synchronization with the to-be-activated SCell, and the serving cell is not limited to serving cells in an FR2 band. In other words, serving cells in an FR1 band may also be co-located (co-located) and time synchronized and have a same transmit beam on a same symbol, to determine a serving cell that is co-located and time synchronized with the to-be-activated SCell and has a same transmit beam on a same symbol as the to-be-activated SCell and that is in the FR1 band.

If an SSB pattern of the to-be-activated SCell is different from that of the activated serving cell or the inactive but known serving cell, the UE may determine the first SSB in the SSBs sent by the to-be-activated SCell, where the first SSB is an SSB corresponding to the second SSB having an optimal transmit beam in the known or activated serving cell. Then, the UE may determine timing information and beam information of the first SSB based on the timing information and the beam information of the second SSB, to receive the first SSB of the to-be-activated SCell based on the timing information and the beam information of the first SSB, so as to ensure that the UE can receive the first SSB by using accurate reception timing and a receive beam, and complete activation of the to-be-activated SCell. In other words, regardless of whether SSB patterns actually used in the serving cells are the same, the UE may always determine the first SSB, in the to-be-activated SCell, corresponding to the second SSB having the optimal transmit beam in SSBs of the serving cell, to reduce cell search and beam measurement time in a cell activation process, and implement quick cell activation.

In a possible design, that a communication apparatus determines a serving cell that can perform information synchronization with a to-be-activated secondary cell SCell includes: The communication apparatus determines that a plurality of serving cells that are on same frequency band FR1 intra-band contiguous carrier aggregation CA as the to-be-activated SCell are serving cells that can perform information synchronization with the to-be-activated SCell; or the communication apparatus determines that a plurality of serving cells belonging to a same timing advance TA group as the to-be-activated SCell are serving cells that can perform information synchronization with the to-be-activated SCell.

In other words, this application is not limited to an assumption in the FR2 band that a plurality of serving cells are co-located and time synchronized and have a same transmit beam on a same symbol. There may also be such an assumption in the FR1 band. The assumption may be predefined in the predefinition in the standard, so that the quick cell activation can be implemented in the FR1 band.

In a possible design, that a communication apparatus determines a serving cell that can perform information synchronization with a to-be-activated secondary cell SCell includes: The communication apparatus receives a radio resource control RRC message sent by the network device, where the RRC message indicates that the to-be-activated SCell is a secondary cell of the communication apparatus, the RRC message includes first indication information, and the first indication information indicates the serving cell that can perform information synchronization with the to-be-activated SCell.

In other words, the first indication information indicates an index of another serving cell that can perform information synchronization with the to-be-activated SCell. In this way, when the SCell is activated, reference may be made to timing information, beam information, and the like of another serving cell, to quickly activate the SCell, and omit a cell search process.

In a possible design, that a communication apparatus determines a serving cell that can perform information synchronization with a to-be-activated secondary cell SCell includes: The communication apparatus receives a radio resource control RRC message sent by the network device, where the RRC message includes second indication information, and the second indication information indicates that the to-be-activated SCell can perform information synchronization with a plurality of serving cells that are in a same band or in a same TA group as the to-be-activated SCell.

In other words, the second indication information indicates whether the UE may assume that the to-be-activated SCell can perform information synchronization with the plurality of serving cells that are in the same band or in the same TA group as the to-be-activated SCell. If the UE may assume that the to-be-activated SCell can perform information synchronization with the plurality of serving cells that are in the same band or in the same TA group as the to-be-activated SCell, the UE may implement the quick cell activation with reference to timing information, beam information, and the like of the plurality of serving cells that are in the same band or in the same TA group as the to-be-activated SCell, and omit an SCell search process.

In a possible design, that the communication apparatus determines a first SSB in SSBs sent by the to-be-activated SCell, where the first SSB corresponds to a second SSB sent by the serving cell includes: The communication apparatus determines that the first SSB in the SSBs sent by the to-be-activated SCell is an SSB whose identifier is the same as an identifier of the second SSB, where when the first SSB corresponds to the second SSB, the first SSB and the second SSB have a same transmit beam.

The second SSB is an SSB having the optimal transmit beam in the SSBs sent by the serving cell, or an SB with best signal quality. If the SSB pattern of the to-be-activated SCell is different from that of the activated serving cell or the inactive but known serving cell, the UE may determine the first SSB in the SSBs sent by the to-be-activated SCell, where the first SSB is an SSB corresponding to the second SSB having the optimal transmit beam in the known or activated serving cell. "Corresponding" may be understood as that identifiers of SSBs are the same. Then, the UE may determine the timing information and the beam information of the first SSB based on the timing information and the beam information of the second SSB, to receive the first SSB of the to-be-activated SCell based on the timing information and the beam information of the first SSB, so as to ensure that the UE can receive the first SSB by using the accurate reception timing and the receive beam, and complete the activation of the to-be-activated SCell.

In a possible design, when the to-be-activated SCell and the serving cell are serving cells on a same band, the to-be-activated SCell and the serving cell have a same SSB pattern; or when the serving cell can perform information synchronization with the to-be-activated SCell, the to-be-activated SCell and the serving cell have a same SSB pattern. That two serving cells have a same SSB pattern is that the two serving cells send SSBs with a same identifier.

That two serving cells have a same SSB pattern (pattern) is that the two serving cells send SSBs with a same index. Alternatively, it may be understood that, the same SSB pattern means that parameters sb-PositionsInBurst of two serving cells are the same. In this way, when the UE needs to activate the SCell, if the SSB pattern of the to-be-activated SCell is different from that of the activated serving cell or the inactive but known serving cell, the UE may determine the first SSB in the SSBs sent by the to-be-activated SCell, where the first SSB is the SSB corresponding to the second SSB having the optimal transmit beam in the known or activated serving cell. Then, the UE may determine the timing information and the beam information of the first SSB based on the timing information and the beam information of the second SSB, to receive the first SSB of the to-be-activated SCell based on the timing information and the beam information of the first SSB, so as to ensure that the UE can receive the first SSB by using the accurate reception timing and the receive beam, and complete the activation of the to-be-activated SCell.

In a possible design, that the communication apparatus determines a first SSB in SSBs sent by the to-be-activated SCell, where the first SSB corresponds to a second SSB sent by the serving cell includes: The communication apparatus receives third indication information sent by the network device, where the third indication information indicates an identifier of the first SSB sent by the to-be-activated SCell, and a transmit beam of the first SSB is the same as a transmit beam of the second SSB sent by the serving cell. In this case, the base station knows an identifier of the second SSB, that is, knows an index of the SSB having the optimal transmit beam in the SSBs of the serving cell. Therefore, the base station can directly indicate the identifier of the first SSB to the UE.

Alternatively, the third indication information indicates a correspondence between an SSB sent by the to-be-activated SCell and an SSB sent by the serving cell, so that the communication apparatus determines an identifier of the first SSB based on the correspondence and an identifier of the second SSB. In this case, the base station does not know the identifier of the second SSB, and therefore notifies the UE of correspondences between all SSBs in the SCell and all SSBs in the activated or known cell. The UE determines the identifier of the first SSB based on the identifier of the second SSB and the correspondence. In this way, the UE can determine the timing information and the beam information of the first SSB based on the timing information and the beam information of the second SSB, to receive the first SSB of the to-be-activated SCell based on the timing information and the beam information of the first SSB, so as to ensure that the UE can receive the first SSB by using the accurate reception timing and the receive beam, and complete the activation of the to-be-activated SCell.

In a possible design, that the communication apparatus activates the to-be-activated SCell based on the first SSB sent by the to-be-activated SCell and timing information and beam information of the second SSB includes: The communication apparatus determines the timing information of the first SSB based on the timing information of the second SSB; the communication apparatus determines the beam information of the first SSB based on the beam information of the second SSB; and the communication apparatus receives, based on the timing information and the beam information of the first SSB, the first SSB sent by the to-be-activated SCell, and activates the to-be-activated SCell.

In this way, if the SSB pattern of the to-be-activated SCell is different from that of the activated serving cell or the inactive but known serving cell, the UE can determine the timing information and the beam information of the first SSB based on the timing information and the beam information of the second SSB, to receive the first SSB of the to-be-activated SCell based on the timing information and the beam information of the first SSB, so as to ensure that the UE can receive the first SSB by using the accurate reception timing and the receive beam, and complete the activation of the to-be-activated SCell.

In a possible design, the information synchronization includes that serving cells are co-located and time synchronized and have a same transmit beam on a same symbol.

According to a second aspect, a cell activation method is provided. The method includes: A network device indicates, to a communication apparatus, a serving cell that can perform information synchronization with a to-be-activated secondary cell SCell, where the serving cell is an activated cell or a known cell; and/or the network device indicates the communication apparatus to determine a first SSB in SSBs sent by the to-be-activated SCell, where the first SSB corresponds to a second SSB in the serving cell; and the network device sends the first SSB and the second SSB to the communication apparatus. The network device may be a base station, and the communication apparatus may be UE.

In this application, an assumption that the information synchronization can be performed is not limited to being applied to an FR2 band, and may also be applied to an FR1 band. When the UE determines, according to a network indication, the serving cell that can perform information synchronization with the to-be-activated SCell, the UE may determine timing information and beam information of the to-be-activated SCell based on timing information and beam information of the serving cell. In addition, if an SSB pattern of the to-be-activated SCell is different from that of the activated serving cell or the inactive but known serving cell, the UE may determine the first SSB in the SSBs sent by the to-be-activated SCell, where the first SSB is an SSB corresponding to the second SSB having an optimal transmit beam in the known or activated serving cell. Then, the UE may determine timing information and beam information of the first SSB based on timing information and beam information of the second SSB, to receive the first SSB of the to-be-activated SCell based on the timing information and the beam information of the first SSB, so as to ensure that the UE can receive the first SSB by using accurate reception timing and a receive beam, and complete activation of the to-be-activated SCell. Therefore, a cell search process of the to-be-activated SCell is omitted, and quick cell activation is implemented.

In a possible design, that a network device indicates, to a communication apparatus, a serving cell that can perform information synchronization with a to-be-activated secondary cell SCell includes: The network device sends a radio resource control RRC message to the communication apparatus, where the RRC message indicates that the to-be-activated SCell is a secondary cell of the communication apparatus, the RRC message includes first indication information, and the first indication information indicates the serving cell that can perform information synchronization with the to-be-activated SCell.

In other words, when configuring the SCell for the UE, the base station may notify, via the network indication, the UE of the serving cell that can perform information synchronization with the SCell, so that when the UE is to activate the SCell, the UE quickly activates the SCell based on synchronization information of the serving cell.

In a possible design, that a network device indicates, to a communication apparatus, a serving cell that can perform information synchronization with a to-be-activated secondary cell SCell includes: The network device sends a radio resource control RRC message to the communication apparatus, where the RRC message includes second indication information, and the second indication information indicates that the to-be-activated SCell can perform information synchronization with a plurality of serving cells that are in a same band or in a same TA group as the to-be-activated SCell.

In other words, when configuring the SCell for the UE, the base station may notify, via the network indication, the UE of the serving cell that can perform information synchronization with the SCell, so that when the UE is to activate the SCell, the UE quickly activates the SCell based on synchronization information of the serving cell.

In a possible design, that the network device indicates the communication apparatus to determine a first SSB in SSBs sent by the to-be-activated SCell includes: The network device sends third indication information to the communication apparatus, where the third indication information indicates an identifier of the first SSB sent by the to-be-activated SCell, and a transmit beam of the first SSB is the same as a transmit beam of the second SSB sent by the serving cell. In this case, the base station knows an identifier of the second SSB, that is, knows an index of the SSB having the optimal transmit beam in SSBs of the serving cell. Therefore, the base station can directly indicate the identifier of the first SSB to the UE.

Alternatively, the third indication information indicates a correspondence between an SSB sent by the to-be-activated SCell and an SSB sent by the serving cell, so that the communication apparatus determines an identifier of the first SSB based on the correspondence and an identifier of the second SSB. In this case, the base station does not know the identifier of the second SSB, and therefore notifies the UE of correspondences between all SSBs in the SCell and all SSBs in the activated or known cell. The UE determines the identifier of the first SSB based on the identifier of the second SSB and the correspondence. In this way, the UE can determine the timing information and the beam information of the first SSB based on the timing information and the beam information of the second SSB, to receive the first SSB of the to-be-activated SCell based on the timing information and the beam information of the first SSB, so as to ensure that the UE can receive the first SSB by using the accurate reception timing and the receive beam, and complete the activation of the to-be-activated SCell.

When the first SSB corresponds to the second SSB, the first SSB and the second SSB have the same transmit beam.

The second SSB is an SSB having the optimal transmit beam in the SSBs sent by the serving cell, or an SB with best signal quality. If the SSB pattern of the to-be-activated SCell is different from that of the activated serving cell or the inactive but known serving cell, the UE may determine the first SSB in the SSBs sent by the to-be-activated SCell, where the first SSB is an SSB corresponding to the second SSB having the optimal transmit beam in the known or activated serving cell.

In a possible design, the information synchronization includes that serving cells are co-located and time synchronized and have a same transmit beam on a same symbol.

According to a third aspect, a cell measurement method is provided. The method includes: A communication apparatus receives configuration information sent by a network device, where the configuration information is for configuring a measurement object, the measurement object is a first frequency, the configuration information includes synchronization information, and the synchronization information includes at least one of a second frequency that has a synchronization relationship with the measurement object, a first serving cell on the second frequency, synchronization precision of the measurement object, and a neighboring cell list; and the communication apparatus measures a cell on the measurement object based on the synchronization information.

Therefore, in this embodiment of this application, when a target frequency may be configured, the synchronization information in the configuration information may indicate an assumption of synchronization between inter-MO cells. In this way, when UE performs inter-frequency measurement, the UE can derive an index of an SSB of a neighboring cell on a non-serving frequency based on an index of an SSB of a serving cell, to reduce SSB index reading time during target frequency measurement. When the synchronization information further indicates precision of an assumption of synchronization between intra-MO or inter-MO cells, if synchronization precision of a network in the cell on the first frequency meets a preset threshold, the UE may determine timing information of a to-be-measured serving cell on the first frequency based on timing information of the first serving cell on the second frequency or a known cell on the second frequency during measurement on the first frequency, to reduce time for searching for the cell on the first frequency.

In a possible design, if the synchronization information includes the synchronization precision, that the communication apparatus measures a cell on the measurement object based on the synchronization information includes: If the synchronization precision is less than or equal to a preset first threshold, the communication apparatus measures the cell on the first frequency based on the timing information of the serving cell on the first frequency or timing information of a known cell on the first frequency. The preset first threshold may be a threshold of synchronization precision at an intra-band CA MRTD level. For example, the preset first threshold may be 3 us (FR1) or 260 ns (FR2).

Therefore, when measuring the cell on the target frequency, the UE may omit a cell search process, and directly perform measurement based on the obtained timing information.

In a possible design, if the synchronization information includes the synchronization precision and the neighboring cell list, that the communication apparatus measures a cell on the measurement object based on the synchronization information includes: If the synchronization precision is less than or equal to a preset first threshold, the communication apparatus measures a plurality of neighboring cells on the first frequency and in the neighboring cell list based on the timing information of the serving cell on the first frequency or timing information of a known cell on the first frequency. The preset first threshold may be a threshold of synchronization precision at an intra-band CA MRTD level. For example, the preset first threshold may be 3 us (FR1) or 260 ns (FR2).

Similarly, when measuring the cell on the target frequency, the UE may omit a cell search process, and directly perform measurement based on the timing information of the serving cell on the first frequency or the timing information of the known cell on the first frequency.

In a possible design, if the synchronization information includes the second frequency or the first serving cell and includes the synchronization precision, where the synchronization precision is less than or equal to a preset second threshold, that the communication apparatus measures a cell on the measurement object based on the synchronization information includes: The communication apparatus determines an identifier of an SSB of the to-be-measured serving cell on the first frequency based on an identifier of an SSB of the first serving cell or the known cell on the second frequency. The preset second threshold may be a threshold of synchronization precision at an SSB level. For example, the preset second threshold may be a length of two SSB symbols.

In other words, the UE may determine an index of the SSB based on a location of a symbol of the SSB of the detected to-be-measured cell in a synchronization information source cell. In this way, SSB index reading time during measurement of the cell on the first frequency can be reduced, to reduce time for measuring the cell on the first frequency.

In a possible design, if the synchronization information includes the second frequency or the first serving cell and includes the synchronization precision, where the synchronization precision is less than or equal to a preset first threshold, that the communication apparatus measures a cell on the measurement object based on the synchronization information includes: The communication apparatus determines the timing information of the to-be-measured serving cell on the first frequency based on the timing information of the first serving cell or the known cell on the second frequency, to measure the cell on the first frequency. The preset first threshold may be a threshold of synchronization precision at an intra-band CA MRTD level. For example, the preset first threshold may be 3 us (FR1) or 260 ns (FR2). Precision of the preset first threshold is higher than precision of a preset second threshold, that is, the preset first threshold is less than the preset second threshold. Therefore, cell search time is reduced, and SSB index reading time is also reduced.

In this way, when measuring the cell on the first frequency, the UE can reduce time for searching for the cell on the first frequency, and directly measure the cell on the first frequency based on the timing information of the serving cell on the first frequency or the timing information of the known cell on the first frequency, to obtain RSRP/RSRQ/an SINR of the cell on the first frequency.

According to a fourth aspect, a cell measurement method is provided. The method includes: A network device determines configuration information to be sent to a communication apparatus; and the network device sends the configuration information to the communication apparatus, where the configuration information is for configuring a measurement object, the measurement object is a first frequency, the configuration information includes synchronization information, and the synchronization information includes at least one of a second frequency that has a synchronization relationship with the measurement object, a first serving cell on the second frequency, precision of synchronization between the second frequency or the first serving cell and the measurement object, or a neighboring cell list.

Therefore, in this embodiment of this application, when a target frequency may be configured, the synchronization information in the configuration information may indicate an assumption of synchronization between inter-MO cells. In this way, when UE performs inter-frequency measurement, the UE can derive an index of an SSB of a neighboring cell on a non-serving frequency based on an index of an SSB of a serving cell, to reduce SSB index reading time during target frequency measurement. When the synchronization information further indicates precision of an assumption of synchronization between intra-MO or inter-MO cells, if synchronization precision of a network in the cell on the first frequency meets a preset threshold, the UE may determine timing information of a to-be-measured serving cell on the first frequency based on timing information of the first serving cell on the second frequency or a known cell on the second frequency during measurement on the first frequency, to reduce time for searching for the cell on the first frequency.

According to a fifth aspect, a communication apparatus is provided. The communication apparatus includes a processor, where the processor is connected to a memory, the memory is configured to store a computer program, and the processor is configured to execute the computer program stored in the memory, to enable the apparatus to perform the method according to any one of the first aspect and the possible designs of the first aspect.

According to a sixth aspect, a communication apparatus is provided. The communication apparatus includes a processor, where the processor is connected to a memory, the memory is configured to store a computer program, and the processor is configured to execute the computer program stored in the memory, to enable the apparatus to perform the method according to any one of the third aspect and the possible designs of the third aspect.

According to a seventh aspect, a network device is provided. The network device includes a processor, where the processor is connected to a memory, the memory is configured to store a computer program, and the processor is configured to execute the computer program stored in the memory, to enable the apparatus to perform the method according to any one of the second aspect and the possible designs of the second aspect.

According to an eighth aspect, a network device is provided. The network device includes a processor, where the processor is connected to a memory, the memory is configured to store a computer program, and the processor is configured to execute the computer program stored in the memory, to enable the apparatus to perform the method according to the fourth aspect.

According to a ninth aspect, a computer-readable storage medium is provided. The computer-readable storage medium stores a computer program. When the computer program is run, the method according to any one of the first aspect and the possible designs of the first aspect is implemented.

According to a tenth aspect, a computer-readable storage medium is provided. The computer-readable storage medium stores a computer program. When the computer program is run, the method according to any one of the third aspect and the possible designs of the third aspect is implemented.

According to an eleventh aspect, a computer-readable storage medium is provided. The computer-readable storage medium stores a computer program. When the computer program is run, the method according to any one of the second aspect and the possible designs of the second aspect is implemented.

According to a twelfth aspect, a computer-readable storage medium is provided. The computer-readable storage medium stores a computer program. When the computer program is run, the method according to the fourth aspect is implemented.

According to a thirteenth aspect, a communication system is provided. The communication system includes the communication apparatus according to the fifth aspect and the network device according to the seventh aspect, or includes the communication apparatus according to the sixth aspect and the network device according to the eighth aspect.

According to a fourteenth aspect, a communication apparatus is provided. The communication apparatus includes: a processing module, configured to: determine a serving cell that can perform information synchronization with a to-be-activated secondary cell SCell, where the serving cell is an activated cell or a known cell; wherein the processing module is further configured to determine a first SSB in SSBs sent by the to-be-activated SCell, where the first SSB corresponds to a second SSB sent by the serving cell; and a transceiver module, further configured to: receive the first SSB from the to-be-activated SCell based on timing information and beam information of the second SSB, and activate the to-be-activated SCell. For beneficial effects of the designs on the communication apparatus side, refer to beneficial effects of the first aspect and the designs of the first aspect.

In a possible design, the processing module is configured to: determine that a serving cell that is on same frequency band FR1 intra-band contiguous carrier aggregation CA as the to-be-activated SCell is the serving cell that can perform information synchronization with the to-be-activated SCell; or determine that a serving cell belonging to a same timing advance TA group as the to-be-activated SCell is the serving cell that can perform information synchronization with the to-be-activated SCell.

In a possible design, the transceiver module is configured to receive a radio resource control RRC message sent by a network device, where the RRC message indicates that the to-be-activated SCell is a secondary cell of the communication apparatus, the RRC message includes first indication information, and the first indication information indicates the serving cell that can perform information synchronization with the to-be-activated SCell.

In a possible design, the transceiver module is configured to receive a radio resource control RRC message sent by a network device, where the RRC message includes second indication information, and the second indication information indicates that the to-be-activated SCell can perform information synchronization with a plurality of serving cells that are in a same band or in a same TA group as the to-be-activated SCell.

In a possible design, the processing module is configured to determine that the first SSB in the SSBs sent by the to-be-activated SCell is an SSB whose identifier is the same as an identifier of the second SSB, where the first SSB and the second SSB have a same transmit beam.

In a possible design, when the to-be-activated SCell and the serving cell are serving cells on a same band, the to-be-activated SCell and the serving cell have a same SSB pattern; or when the serving cell can perform information synchronization with the to-be-activated SCell, the to-be-activated SCell and the serving cell have a same SSB pattern. That two serving cells have a same SSB pattern is that the two serving cells send SSBs with a same identifier.

In a possible design, the transceiver module is configured to receive third indication information sent by a network device, where the third indication information indicates an identifier of the first SSB sent by the to-be-activated SCell, and a transmit beam of the first SSB is the same as a transmit beam of the second SSB sent by the serving cell; or the third indication information indicates a correspondence between an SSB sent by the to-be-activated SCell and an SSB sent by the serving cell, so that the communication apparatus determines an identifier of the first SSB based on the correspondence and an identifier of the second SSB.

In a possible design, the processing module is configured to: determine timing information of the first SSB based on the timing information of the second SSB; and determine beam information of the first SSB based on the beam information of the second SSB. The transceiver module is configured to: receive, based on the timing information and the beam information of the first SSB, the first SSB sent by the to-be-activated SCell, and activate the to-be-activated SCell.

In a possible design, the information synchronization includes that serving cells are co-located and time synchronized and have a same transmit beam on a same symbol.

According to a fifteenth aspect, a network device is provided. The network device includes: a transceiver module, configured to: indicate, to a communication apparatus, a serving cell that can perform information synchronization with a to-be-activated secondary cell SCell, where the serving cell is an activated cell or a known cell; and/or indicate the communication apparatus to determine a first SSB in SSBs sent by the to-be-activated SCell, where the first SSB corresponds to a second SSB in the serving cell. The transceiver module is further configured to send the first SSB and the second SSB to the communication apparatus. For beneficial effects of the designs on the network device side, refer to beneficial effects of the second aspect and the designs of the second aspect.

In a possible design, the transceiver module is configured to send a radio resource control RRC message to the communication apparatus, where the RRC message indicates that the to-be-activated SCell is a secondary cell of the communication apparatus, the RRC message includes first indication information, and the first indication information indicates the serving cell that can perform information synchronization with the to-be-activated SCell.

In a possible design, the transceiver module is configured to send a radio resource control RRC message to the communication apparatus, where the RRC message includes second indication information, and the second indication information indicates that the to-be-activated SCell can perform information synchronization with a plurality of serving cells that are in a same band or in a same TA group as the to-be-activated SCell.

In a possible design, the transceiver module is configured to send third indication information to the communication apparatus, where the third indication information indicates an identifier of the first SSB sent by the to-be-activated SCell, and a transmit beam of the first SSB is the same as a transmit beam of the second SSB sent by the serving cell; or the third indication information indicates a correspondence between an SSB sent by the to-be-activated SCell and an SSB sent by the serving cell, so that the communication apparatus determines an identifier of the first SSB based on the correspondence and an identifier of the second SSB.

In a possible design, the information synchronization includes that serving cells are co-located and time synchronized and have a same transmit beam on a same symbol.

According to a sixteenth aspect, a communication system is provided. The communication system includes the communication apparatus according to the fourteenth aspect and the network device according to the fifteenth aspect.

According to a seventeenth aspect, a communication apparatus is provided. The communication apparatus includes: a transceiver module, configured to receive configuration information sent by a network device, where the configuration information is for configuring a measurement object, the measurement object is a first frequency, the configuration information includes synchronization information, and the synchronization information includes at least one of a second frequency that has a synchronization relationship with the measurement object, a first serving cell on the second frequency, synchronization precision of the measurement object, or a neighboring cell list; and a processing module, configured to measure a cell on the measurement object based on the synchronization information. For beneficial effects on the communication apparatus side according to the seventeenth aspect, refer to the third aspect.

In a possible design, if the synchronization information includes the synchronization precision, the processing module is configured to: if the synchronization precision is less than or equal to a preset first threshold, measure the cell on the first frequency based on timing information of a serving cell on the first frequency or timing information of a known cell on the first frequency.

In a possible design, if the synchronization information includes the synchronization precision and the neighboring cell list, the processing module is configured to: if the synchronization precision is less than or equal to a preset first threshold, measure a plurality of neighboring cells on the first frequency and in the neighboring cell list based on timing information of a serving cell on the first frequency or timing information of a known cell on the first frequency.

In a possible design, if the synchronization information includes the second frequency or the first serving cell and includes the synchronization precision, where the synchronization precision is less than or equal to a preset second threshold, the processing module is configured to determine an identifier of an SSB of a to-be-measured serving cell on the first frequency based on an identifier of an SSB of the first serving cell or a known cell on the second frequency. The preset second threshold may be a threshold of synchronization precision at an SSB level. For example, the preset second threshold may be a length of two SSB symbols.

In a possible design, if the synchronization information includes the second frequency or the first serving cell and includes the synchronization precision, where the synchronization precision is less than or equal to a preset first threshold, the processing module is configured to determine timing information of a to-be-measured serving cell on the first frequency based on timing information of the first serving cell or a known cell on the second frequency, to measure the cell on the first frequency.

According to an eighteenth aspect, a network device is provided. The network device includes: a processing module, configured to determine configuration information to be sent to a communication apparatus; and a transceiver module, configured to send the configuration information to the communication apparatus, where the configuration information is for configuring a measurement object, the measurement object is a first frequency, the configuration information includes synchronization information, and the synchronization information includes at least one of a second frequency that has a synchronization relationship with the measurement object, a first serving cell on the second frequency, precision of synchronization between the second frequency or the first serving cell and the measurement object, or a neighboring cell list. For beneficial effects on the communication apparatus side according to the eighteenth aspect, refer to the fourth aspect.

According to a nineteenth aspect, a communication system is provided. The communication system includes the communication apparatus according to the seventeenth aspect and the network device according to the eighteenth aspect.

### BRIEF DESCRIPTION OF DRAWINGS

FIG. 1 is a schematic diagram of a network architecture according to an embodiment of this application;
FIG. 2 is a schematic diagram of locations of symbols of SSBs of cells on different frequencies according to an embodiment of this application;
FIG. 3 is a schematic flowchart of a cell activation method according to an embodiment of this application;
FIG. 4 is a schematic diagram of locations of symbols of SSBs of cells on different frequencies according to an embodiment of this application;
FIG. 5 is a schematic diagram of locations of symbols of SSBs of cells on different frequencies according to an embodiment of this application;
FIG. 6 is a schematic flowchart of a cell measurement method according to an embodiment of this application;
FIG. 7 is a schematic diagram of a structure of a terminal device according to an embodiment of this application;
FIG. 8 is a schematic diagram of a structure of a terminal device according to an embodiment of this application;
FIG. 9 is a schematic diagram of a structure of a network device according to an embodiment of this application;
FIG. 10 is a schematic diagram of a structure of a network device according to an embodiment of this application;
FIG. 11 is a schematic diagram of a structure of a terminal device according to an embodiment of this application;
FIG. 12 is a schematic diagram of a structure of a terminal device according to an embodiment of this application;
FIG. 13 is a schematic diagram of a structure of a terminal device according to an embodiment of this application; and
FIG. 14 is a schematic diagram of a structure of a network device according to an embodiment of this application.

### DESCRIPTION OF EMBODIMENTS

For ease of understanding, some concepts related to embodiments of this application are described as examples for reference. Details are described as follows:

RRM measurement: In 5G, to assist mobility management of a terminal device, for example, when performing cell handover, the terminal device measures reference signal received power (reference signal received power, RSRP), reference signal received quality (reference signal received quality, RSRQ), or the like. During measurement, a network device configures an SSB-based measurement timing configuration (SSB-based measurement timing configuration, SMTC) for each target frequency in a unit of frequency, to periodically send a synchronization signal block (synchronization signal (and physical broadcast channel, physical broadcast channel, PBCH) block, SSB) to a cell on each frequency based on the SMTC. The terminal device obtains RSRP or RSRQ of the cell through calculation based on the received SSB, to determine signal quality of the cell. Different from a design in which a downlink synchronization signal and a physical broadcast channel of a cell are separated in 4G, a primary/secondary synchronization signal SS and a physical broadcast channel PBCH of a cell are coupled to some extent in 5G, and appear in a form of an SS/PBCH resource block, which is referred to as an SSB (synchronization signal and PBCH block) for short.

SCell activation: After the network device configures an SCell for the terminal device, the SCell is in a deactivated state by default, and cannot be for data transmission. When the SCell is required for data transmission, the network device may send an activation command to the terminal device. After the terminal device completes an activation-related action, the SCell may be for data transmission.

Frequency: The frequency is a specific absolute frequency value, and is usually a center frequency of a modulated signal.

Maximum receive timing difference (maximum receive timing difference, MRTD): When the terminal device receives signals from two cells, there is a receive timing difference (receive timing difference, RTD) between the signals of the two cells. The MRTD is a maximum value of the RTD that needs to be supported by the UE and that is defined in a standard. If the RTD exceeds the MRTD, the terminal device may not correctly receive the signals from the two cells.

Timing advance group (timing advance group, TAG): The TAG includes one or more serving cells that have a same uplink timing advance and a same downlink reference cell.

FR1 intra-band contiguous (intra-band contiguous) carrier aggregation (carrier aggregation, CA): When a plurality of carriers of different frequencies are in a same band (band), the plurality of carriers are intra-band CA. If the plurality of carriers are contiguous, the plurality of carriers may be referred to as intra-band contiguous CA. If the plurality of carriers are all on a frequency FR1, the plurality of carriers may be referred to as FR1 intra-band contiguous CA.

FR1 intra-band non-contiguous CA: Refer to the foregoing descriptions. When a plurality of carriers of different frequencies are in a same band but are not contiguous, the plurality of carriers may be referred to as intra-band non-contiguous CA. If the plurality of carriers are all on a frequency FR1, the plurality of carriers may be referred to as FR1 intra-band non-contiguous CA.

FR1 inter-band CA: Refer to the foregoing descriptions. When a plurality of carriers of different frequencies are in different bands, the plurality of carriers may be referred to as inter-band CA. If the plurality of carriers are all on a frequency FR1, the plurality of carriers may be referred to as FR1 inter-band CA.

According to a definition of the 3rd generation partnership project (3rd generation partnership project, 3GPP), a 5G frequency range is divided into a frequency band (Frequency Range, FR) 1 (450 MHz to 6000 MHz, also referred to as sub-6 GHz) and an FR2 (24250 MHz to 52600 MHz, also referred to as above-6 GHz or millimeter wave).

The following describes technical solutions in embodiments of this application with reference to the accompanying drawings in embodiments of this application. In the descriptions in embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists. In addition, in the descriptions in embodiments of this application, "a plurality of' means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of' means two or more.

Embodiments of this application may be applied to a 5G communication system, and may be specifically applied to all CA scenarios, for example, an FR1 intra-band contiguous CA scenario, or may be applied to an FR1 intra-band non-contiguous CA or an FR1 inter-band CA scenario.

Currently, it is specified in a standard that in the FR1 intra-band contiguous CA scenario, a plurality of serving cells are co-located and synchronized. The synchronization means that a transmit timing difference between two cells is less than or equal to a threshold, for example, 260 ns. However, no conclusion is drawn on whether it can be assumed that the plurality of serving cells in the FR1 intra-band contiguous CA scenario have a same transmit beam on a same symbol, and no conclusion is drawn on whether co-location, synchronization, and/or having a same transmit beam can be assumed in the FR1 intra-band non-contiguous CA scenario or the FR1 inter-band CA scenario. In this application, whether co-location, synchronization, and/or having a same transmit beam can be assumed in these scenarios is described in the following embodiments. Having a same transmit beam means that angles of transmit beams are the same. In a standard, a same transmit spatial filter parameter (downlink spatial domain transmission filter) is used on a same symbol of two cells.

Even if a plurality of cells have a same transmit beam on a same SSB, there is still a case in which the plurality of cells have different SSB patterns (patterns). Consequently, if the terminal device determines to perform an activation action with reference to beam information and timing information of an SSB of an activated or known cell, and a to-be-activated cell does not send the SSB at a location of a symbol of the SSB, the terminal device cannot determine a specific SSB for activation in the to-be-activated cell. How the terminal device determines an SSB used in a quick activation process in these scenarios is described in the following embodiments of this application.

A network architecture in this application may include a plurality of network devices and a plurality of communication apparatuses.

The network device in embodiments of this application may be a base station gNB (gNodeB), a transmission point (transmission reception point, TRP, or transmission point, TP), or the like in a 5G communication system, or one antenna panel or a group of antenna panels (including a plurality of antenna panels) of a base station in the 5G communication system; may be a network node that constitutes a gNB or a transmission point, for example, a baseband unit (baseband unit, BBU), or a distributed unit (DU, distributed unit); or is a vehicle-mounted device, a wearable device, a network device in the future evolved PLMN network, or the like.

The communication apparatus in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like. The communication apparatus in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile network (public land mobile network, PLMN), or the like. An application scenario is not limited in embodiments of this application. In this application, methods and steps that are implemented by the communication apparatus may also be implemented by a component (for example, a chip or a circuit) that may be used in the communication apparatus. In this application, the foregoing communication apparatus and the component (for example, the chip or the circuit) that can be disposed in the foregoing communication apparatus are collectively referred to as the communication apparatus.

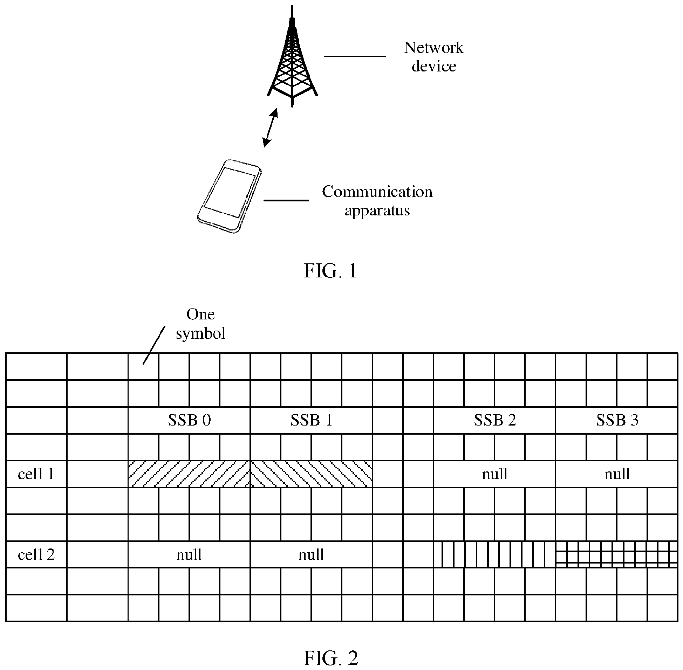

In the foregoing network architecture, with reference to FIG. 1, an example in which the communication apparatus is UE and the network device is a base station is used. The UE may be in a single-connectivity mode, that is, connected to one base station, or may receive and send data in two base stations simultaneously, that is, in a dual-connectivity (dual-connectivity) mode. One base station is responsible for sending a radio resource control (radio resource control, RRC) message to the UE, and is responsible for interacting with a core network control plane entity. The base station is referred to as a master base station MeNB, and the other base station is referred to as a secondary base station SeNB. In the master base station, one cell of the UE is a primary cell PCell of the UE, where the RRC message is sent to the UE through the primary cell, and other cells are secondary cells SCells. In the following embodiments, the master base station is referred to as a base station for short. The base station in this application may be in a single-connectivity mode, or may be in a dual-connectivity mode or another connectivity mode.

The network device configures an SMTC for each target frequency in a unit of frequency. A cell on each frequency periodically sends an SSB, and the network device ensures that SSBs sent by a plurality of cells on one frequency are in an SMTC window. In a movement process, the UE periodically performs RRM measurement. During measurement, the UE may periodically measure SSBs of a plurality of SCells, to obtain RSRP or RSRQ of each SCell through calculation based on the received SSBs of the plurality of SCells. When the UE determines that the RSRP or the RSRQ meets a specific condition, the UE reports the RSRP or the RSRQ of the SCell to the base station. When determining that the SCell needs to send a particular amount of data to the UE, the base station sends an activation command to the UE, to notify the UE that the SCell needs to be activated. However, when the UE receives the activation command, the SCell may be known or unknown to the UE. "Known" means that the UE has performed RRM measurement on the SCell and reported a measurement result to the base station in a preset period before receiving the activation command; otherwise, the SCell is unknown. For example, the preset period may be 5s or another value.

When the UE determines to activate an unknown SCell, the UE generally needs to first perform cell search to obtain timing information of the to-be-activated SCell. However, in an FR2 band, if the UE determines that there is an activated serving cell or an inactive but known SCell, the UE may not perform cell search, but directly receive, by using timing information and beam information of the activated serving cell or the known serving cell, an SSB sent by the base station, to implement quick activation. However, in the FR2 band, a prerequisite for the UE to use the timing information and the beam information of the activated serving cell or the known serving cell is that the base station needs to ensure that all serving cells in the FR2 band are co-located and time synchronized and have a same transmit beam on a same symbol.

The co-location may be understood as that two serving cells are in coverage of a same antenna. The time synchronization may be understood as that start locations of symbols, start locations of slots, start locations of frames, and the like of signals sent by two serving cells are aligned, or an error is within a particular range (for example, 260 ns). Having the same transmit beam on the same symbol may be understood as that when two cells perform sending on a same symbol, angles of transmit beams are the same. In a standard, a same transmit spatial filter parameter (downlink spatial domain transmission filter) is used on a same symbol of two cells.

On a premise that a plurality of serving cells have a same transmit beam on a same symbol, if a to-be-activated SCell directly receives an SSB with reference to timing information and beam information of an activated serving cell or a known serving cell, there may be a case in which the to-be-activated SCell and the activated serving cell or the known serving cell have different SSB patterns (patterns). That two cells have different SSB patterns means that sets of identifiers (indexes) of SSBs sent by the two cells to the UE are different.

For example, refer to FIG. 2. A cell 1 and a cell 2 are cells on different frequencies, are co-located and time-synchronized, and have a same transmit beam. The UE determines that the cell 1 is an activated cell or an inactive but known cell, the cell 2 is a to-be-activated cell, and the cell 1 and the cell 2 have the same transmit beam on a same symbol. However, SSB patterns sent by the cell 1 and the cell 2 are different. The cell 1 sends an SSB 0 and an SSB 1, and the cell 2 sends an SSB 2 and an SSB 3. 0, 1, 2, and 3 are indexes of the SSB. If the UE determines that a transmit beam corresponding to the SSB 0 of the cell 1 is an optimal transmit beam, namely, a transmit beam with best signal quality, but the UE cannot directly receive, with reference to a location of a symbol of the SSB 0, the SSB sent by the cell 2 because the cell 2 does not send any SSB at the location of the symbol of the SSB 0, and the UE cannot determine whether a transmit beam of the SSB 2 or the SSB 3 sent by the cell 2 is the same as the transmit beam of the SSB 0 of the cell 1, it cannot be determined whether the UE can receive the SSB 2 or the SSB 3 by using timing for receiving the SSB 0 and a receive beam, to implement quick activation of the cell 2. In an example in FIG. 2, each SSB occupies four symbols.

Therefore, this application resolves how the UE quickly activates a to-be-activated serving cell by using synchronization information of an activated serving cell or an inactive but known serving cell if two serving cells are co-located and time-synchronized and have a same transmit beam, but have different SSB patterns. In addition, it is specified in a current standard that, it can be assumed that the following conditions are met in an FR2 band: A plurality of serving cells are co-located and time synchronized and have a same transmit beam. However, no conclusion is drawn on whether the conditions may also be assumed in another scenario. Therefore, this application further describes how the UE quickly activates a to-be-activated serving cell by using synchronization information of an activated serving cell or an inactive but known serving cell in the another scenario (for example, an FR1 band).

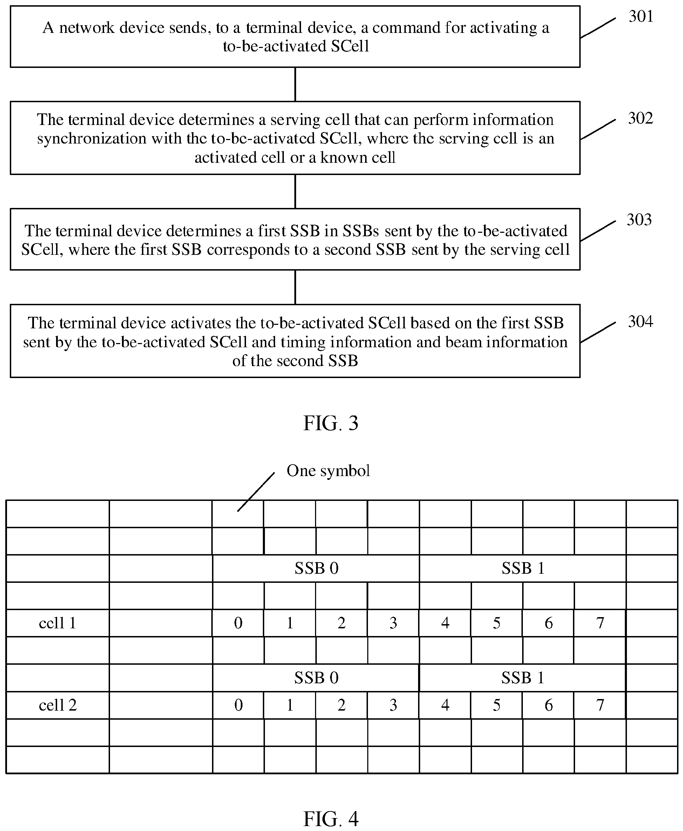

Based on the foregoing descriptions, an embodiment of this application provides a cell activation method. As shown in FIG. 3, the method includes the following steps.

301: A network device sends, to a terminal device, a command for activating a to-be-activated SCell.

In this embodiment of this application, an example in which the terminal device is UE, the network device is a base station, and a serving cell is a cell 1 is used for description.

As described above, an SCell is in a deactivated state by default after being configured. When the base station determines that the base station needs to perform data exchange with the UE through the SCell, the base station may send, to the UE, a command for activating the SCell. In this case, the SCell is a to-be-activated cell.

In addition, the base station may configure the UE to periodically measure RSRP or RSRQ of each serving cell (SCell). When RSRP or RSRQ of any SCell meets a condition, the UE reports to the base station. If the UE has reported the RSRP or the RSRQ of the SCell in a period of time before the UE receives the command for activating the SCell, the SCell is a known cell; otherwise, the SCell is an unknown cell.

302: The terminal device determines a serving cell that can perform information synchronization with the to-be-activated SCell, where the serving cell is an activated cell or a known cell.

In some embodiments, it is predefined in a standard that information synchronization can be performed between a plurality of serving cells on FR1 intra-band contiguous CA.

Alternatively, it is predefined in a standard that information synchronization can be performed between a plurality of serving cells belonging to a same TAG.

To be specific, if the UE receives the activation command sent by the base station, and if the UE determines that both the to-be-activated SCell and the cell 1 are serving cells on the FR1 intra-band contiguous CA and the cell 1 is an activated serving cell or an inactive serving cell but is known to the UE, the UE may determine that information synchronization can be performed between the to-be-activated SCell and the cell 1.

Alternatively, if the UE receives the activation command sent by the base station, and if the UE determines that the to-be-activated SCell and the cell 1 both belong to a same TAG, the UE may determine that information synchronization can be performed between the to-be-activated SCell and the cell 1.

That information synchronization can be performed between two serving cells means that the serving cells are co-located and time synchronized and have a same transmit beam on a same symbol.

In some embodiments, it is predefined in the standard that information synchronization can be performed between a plurality of serving cells on FR1 intra-band non-contiguous CA, or information synchronization can be performed between a plurality of serving cells on FR1 inter-band CA.

Certainly, the predefinition in the standard in step 302 may also include that information synchronization can be performed between a plurality of serving cells on FR2 intra-band CA.

In some embodiments, the UE may not need to determine, according to the predefinition in the standard, the serving cell that can perform information synchronization with the to-be-activated SCell, but an RRC message indicating that the base station configures the SCell for the UE indicates, in advance, the serving cell that can perform information synchronization with the SCell. That is, when the base station configures the SCell for the UE, the UE may receive the RRC message sent by the base station, where the RRC message indicates that the to-be-activated SCell is a secondary cell of the UE. It is different from a current RRC message that, the RRC message includes first indication information, where the first indication information indicates the serving cell that can perform information synchronization with the to-be-activated SCell.

For example, the first indication information indicates an identifier of the serving cell (an index of the serving cell) that can perform information synchronization with the to-be-activated SCell.

In some embodiments, the base station may also indicate whether the UE may assume that the to-be-activated SCell can perform information synchronization with a plurality of serving cells that are in a same band or in a same TA group as the to-be-activated SCell. When the assumption is true, the UE may receive the RRC message sent by the base station, where the RRC message includes second indication information, and the second indication information indicates that the to-be-activated SCell can perform information synchronization with the plurality of serving cells that are in the same band or in the same TA group as the to-be-activated SCell.

For example, the second indication information may be 1 bit. When a value of 1 bit is 1, it indicates that the assumption is true, that is, the information synchronization can be performed between the to-be-activated SCell and the plurality of serving cells that are in the same band or in the same TA group as the to-be-activated SCell. When a value of 1 bit is 0, it indicates that the assumption is not true, that is, the information synchronization cannot be performed between the to-be-activated SCell and the plurality of serving cells that are in the same band or in the same TA group as the to-be-activated SCell.

303: The terminal device determines a first SSB in SSBs sent by the to-be-activated SCell, where the first SSB corresponds to a second SSB sent by the serving cell.

When the UE determines the serving cell that can perform information synchronization with the to-be-activated SCell, the UE may further determine a specific SSB that is in the SSBs sent by the to-be-activated SCell and that is for activating the to-be-activated SCell, that is, determine an index of an SSB that is in the SSBs sent by the to-be-activated SCell and that is suitable for activating the to-be-activated SCell. The SSB is denoted as the first SSB in this embodiment of this application.

Because the activated serving cell cell 1 or the inactive but known cell 1 that can perform information synchronization is determined in step 302, the UE may determine an SSB having an optimal transmit beam in SSBs of the cell 1, namely, an SSB with best signal quality in the SSBs of the cell 1. Locations of symbols occupied SSBs with different indexes are different, and the SSBs with the different indexes correspond to different transmit beams. This is predefined in the standard. When the UE determines that the SSB having the optimal transmit beam in the SSBs of the cell 1 is the second SSB, the UE determines that the first SSB for activating the to-be-activated SCell is an SSB whose transmit beam is the same as a transmit beam of the second SSB. Therefore, in this application, an SSB that is in the SSBs of the to-be-activated SCell and that corresponds to the second SSB may be determined as the first SSB, where the first SSB is for activating the to-be-activated cell.

There may be a plurality of implementations of determining the first SSB that is in the SSBs of the to-be-activated SCell and that corresponds to the second SSB. The following implementations are listed in this embodiment of this application.

In some embodiments, the UE may determine, according to the predefinition in the standard, the first SSB in the SSBs sent by the to-be-activated SCell, where the first SSB corresponds to the second SSB in the serving cell.

For example, it may be specified in the predefinition in the standard that serving cells in a same band have a same SSB pattern; or it is predefined in the standard that serving cells that can perform information synchronization have a same SSB pattern.

That two serving cells have a same SSB pattern (pattern) is that the two serving cells send SSBs with a same index. Alternatively, it may be understood that, the same SSB pattern means that parameters sb-PositionsInBurst of two serving cells are the same.

In this case, when it is determined in step 302 that both the to-be-activated SCell and the cell 1 are the serving cells in an FR1 band, the UE may determine that the to-be-activated SCell and the cell 1 have a same SSB pattern. Alternatively, when it is determined in step 302 that the cell 1 is the serving cell that can perform information synchronization with the to-be-activated SCell, the UE may determine that the to-be-activated SCell and the cell 1 have a same SSB pattern. In this case, if the second SSB is the SSB having the optimal transmit beam in the SSBs sent by the cell 1, the UE may determine, according to the predefinition in the standard, that the first SSB is the SSB whose identifier is the same as the identifier of the second SSB.

For example, the to-be-activated SCell is a cell 2. Refer to FIG. 4. It is assumed that an SSB pattern sent by the cell 1 is a sent SSB 0 and SSB 1, and indexes of symbols and transmit beams of the SSB 0 and the SSB 1 are different. For example, the SSB 0 sent by the cell 1 occupies symbols 0, 1, 2, and 3 in time domain, and the SSB 1 sent by the cell 1 occupies symbols 4, 5, 6, and 7 in time domain. In this case, when the UE determines that the SSB having the optimal transmit beam in the cell 1 is the SSB 0, that is, the second SSB is the SSB 0 of the cell 1, because the two cells have a same SSB pattern and have a same transmit beam on a same symbol, the SSB 0 of the cell 1 and an SSB 0 of the cell 2 have a same transmit beam, and the UE determines that the first SSB is the SSB 0 of the cell 2. The first SSB occupies symbols 0, 1, 2, and 3, and a start location of the symbol 0 occupied by the first SSB is the same as a start location of the symbol 0 of the second SSB. In other words, timing information is the same, and a transmit beam of the first SSB is the transmit beam of the SSB 0 sent by the cell 1.

In some embodiments, the UE may determine, according to a network indication, the first SSB in the SSBs sent by the to-be-activated SCell, where the first SSB corresponds to the second SSB in the serving cell. That is, the first SSB is an SSB that has the same transmit beam as the second SSB.

For example, the UE may receive third indication information sent by the base station.

The third indication information indicates an index of the first SSB sent by the to-be-activated SCell, and the transmit beam of the first SSB is the same as the transmit beam of the second SSB sent by the serving cell.

To be specific, in this implementation, the base station has learned of an index of the second SSB having the optimal transmit beam in the cell 1 (for example, through measurement reporting performed by the UE on the cell 1). Therefore, the base station can determine an index of an SSB that is in the cell 2 and that has the same transmit beam as the second SSB, and directly indicate, to the UE, the index of the first SSB in the SSBs sent by the to-be-activated SCell. The index of the first SSB may be the same as or different from the index of the second SSB. For example, the index of the second SSB is an SSB 0, and the network determines that the index of the first SSB is an SSB 1. Start locations of symbols occupied by the first SSB and the second SSB are different. The UE determines a start location (a location of a symbol 4) of the first SSB based on a start location of a symbol (namely, a location of a symbol 0) of the second SSB.

Alternatively, the third indication information indicates a correspondence between an SSB sent by the to-be-activated SCell and an SSB sent by the serving cell, so that the UE determines an index of the first SSB based on the correspondence and an index of the second SSB.

In this implementation, the base station does not know the index of the second SSB having the optimal transmit beam in the cell 1. Therefore, the base station may notify the UE of correspondences between all SSBs in the to-be-activated SCell and all SSBs in the activated or known serving cell, and the UE may determine the index of the first SSB based on the index of the second SSB having the optimal transmit beam in the cell 1 and the correspondence. For example, the index of the second SSB is an SSB 0, and in the correspondence, the SSB 0 of the cell 1 corresponds to an SSB 2 in the SSBs of the to-be-activated SCell. In this case, the SSB 2 of the to-be-activated SCell and the SSB 0 of the cell 1 have the same transmit beam, and the UE determines that the index of the first SSB is 2. If a start location of a symbol corresponding to the SSB 0 is the symbol 0, the UE may determine timing information of the symbol 0 in the to-be-activated SCell based on timing information of the symbol 0 of the SSB 0, and therefore may derive timing information of a symbol of the SSB 2 based on the timing information of the symbol 0 in the to-be-activated SCell.

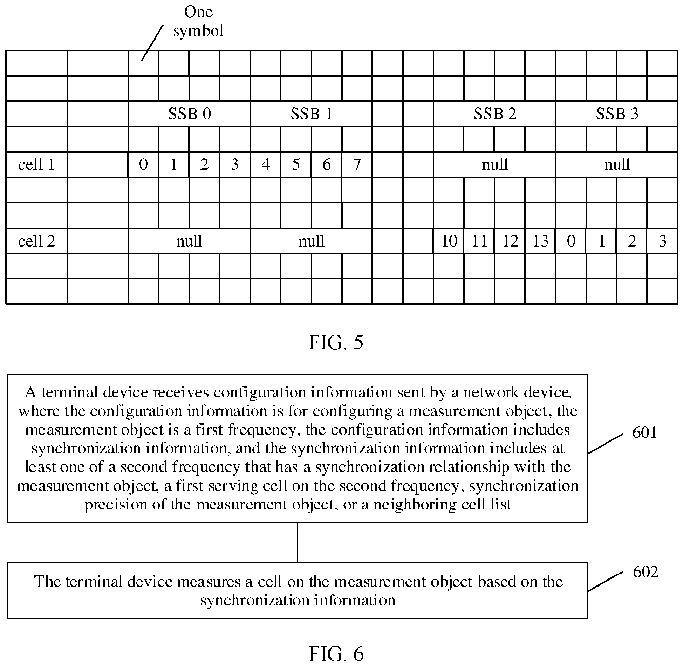

Refer to FIG. 5. If the to-be-activated SCell is a cell 2, assuming that symbols of an SSB 2 in the to-be-activated SCell are symbols 10, 11, 12, and 13, when timing information of a symbol 0 in the to-be-activated SCell, namely, a start location of the symbol 0, is determined, a start location of the symbol 10 may be determined based on the start location of the symbol 0.

304: The terminal device activates the to-be-activated SCell based on the first SSB sent by the to-be-activated SCell and the timing information and the beam information of the second SSB.

When the UE determines the second SSB and timing information and beam information of the second SSB, the UE may follow the descriptions in step 303. To be specific, the UE determines timing information of the first SSB based on the timing information of the second SSB, that is, derive the timing information of the first SSB based on the timing information of the second SSB; and determines beam information of the first SSB based on the beam information of the second SSB. The first SSB and the second SSB have the same transmit beam. Therefore, the UE may receive, based on the timing information and the beam information of the second SSB, the first SSB sent by the to-be-activated SCell, to activate the to-be-activated SCell.

Therefore, in this embodiment of this application, the UE may determine, according to the predefinition in the standard or the network indication, the serving cell that can perform information synchronization with the to-be-activated SCell, and the serving cell is not limited to serving cells in an FR2 band. In other words, the serving cells in the FR1 band may also be co-located and time synchronized and have a same transmit beam on a same symbol, to determine a serving cell that is co-located and time synchronized with the to-be-activated SCell and has a same transmit beam on a same symbol as the to-be-activated SCell and that is in the FR1 band.

If an SSB pattern of the to-be-activated SCell is different from that of the activated serving cell or the inactive but known serving cell, the UE may determine the first SSB in the SSBs sent by the to-be-activated SCell, where the first SSB is the SSB corresponding to the second SSB having the optimal transmit beam in the known or activated serving cell. Then, the UE may determine the timing information and the beam information of the first SSB based on the timing information and the beam information of the second SSB, to receive the first SSB of the to-be-activated SCell based on the timing information and the beam information of the first SSB, so as to ensure that the UE can receive the first SSB by using accurate reception timing and a receive beam, and complete activation of the to-be-activated SCell. In other words, regardless of whether SSB patterns actually used in the serving cells are the same, the UE may always determine the first SSB, in the to-be-activated SCell, corresponding to the second SSB having the optimal transmit beam in the SSBs of the serving cell, to reduce cell search and beam measurement time in a cell activation process, and implement quick cell activation.

In addition, the network further configures a plurality of frequencies for the UE. Each time a frequency is configured, the frequency may be used as a measurement object (measurement object, MO). Each frequency may correspond to a plurality of cells, and cells on each frequency may belong to a same site or different sites. For example, a frequency on which a current serving cell of the UE is located is a first frequency. However, based on a result obtained by measuring the first frequency by the UE, it can be learned that a signal instruction of the UE on the first frequency is poor. In this case, the base station may configure a new frequency for the UE, for example, a second frequency, so that the UE measures a cell on the second frequency. When the UE notifies the base station of a measurement result of the cell on the second frequency, the base station may determine, based on the measurement result of the cell on the second frequency, whether the UE needs to be handed over to the second frequency. If the measurement result of the cell on the second frequency meets a condition, the base station may indicate the UE to be handed over to a target cell. If no measurement result of the cell on the second frequency meets a condition, the base station may indicate the UE to measure another frequency, for example, a third frequency.

Currently, it is defined in the standard that the network may configure a parameter deriveSSB-IndexFromCell when configuring an MO. A configuration of the parameter means that the UE may derive an index of an SSB of another cell based on an index of an SSB of a serving cell (a target frequency of the MO is a frequency on which the serving cell is located) or any cell (a target frequency of the MO is not the frequency on which the serving cell is located) on the configured MO, to reduce SSB index reading time required for measuring the cell on the first frequency.

In this application, when configuring the MO, the network may further include synchronization information, where the synchronization information is for implementing inter-frequency synchronization. For example, when two basically synchronized frequencies are deployed on the network, when the UE performs inter-frequency measurement, an index of an SSB of a neighboring cell on a non-serving frequency may be derived based on an index of an SSB of the serving cell, to reduce SSB index reading time during target frequency measurement, thereby reducing cell search time in a frequency measurement process.

In this application, when a cell deployed on a frequency by the network has good synchronization precision, when performing measurement on the frequency, the UE may obtain timing of another neighboring cell by using timing of a serving cell or a detected cell, to reduce cell search time in a measurement process.

Therefore, an embodiment of this application further provides a cell measurement method. As shown in FIG. 6, the method includes the following steps.

601: A terminal device receives configuration information sent by a network device, where the configuration information is for configuring a measurement object, the measurement object is a first frequency, the configuration information includes synchronization information, and the synchronization information includes at least one of a second frequency that has a synchronization relationship with the measurement object, a first serving cell on the second frequency, synchronization precision of the measurement object, or a neighboring cell list.

In this embodiment of this application, an example in which the terminal device is UE, and the network device is a base station is used for description.

That is, the base station may send the configuration information to the UE, where the configuration information is for configuring the MO, and the configured MO is denoted as the first frequency. When the first frequency is configured, the configuration information further includes the synchronization information. The synchronization information may carry at least one of the following information:
(1) the second frequency that has the synchronization relationship with the first frequency or the first serving cell on the second frequency that has the synchronization relationship with the first frequency;
(2) the synchronization precision of the first frequency, where
   the synchronization precision may be synchronization at an SSB level, synchronization at an MRTD level, or synchronization precision at another level, which is not limited in this application;
   the synchronization precision is precision of synchronization between a cell on the first frequency and a synchronization information source; the synchronization information source may be a serving cell on the first frequency, or a known non-serving cell on the first frequency; when the synchronization information includes the second frequency or the first serving cell, the synchronization information source may be the first serving cell or a known non-serving cell on the second frequency; or
(3) the neighboring cell list, where
   a cell in the neighboring cell list may be a non-serving cell at another site on the first frequency or a non-serving cell on another frequency relative to a serving cell of the UE.

602: The terminal device measures the cell on the measurement object based on the synchronization information.

In some embodiments, if the synchronization information does not include the information (1) but includes the information (2), that is, includes the synchronization precision, that the UE measures the cell on the measurement object based on the synchronization information includes: If the synchronization precision is less than or equal to a preset first threshold, the UE measures the cell on the first frequency based on timing information of the serving cell on the first frequency or timing information of the known cell on the first frequency. In this way, when measuring the cell on the first frequency, the UE can reduce time for searching for the cell on the first frequency, and directly measure the cell on the first frequency based on the timing information of the serving cell on the first frequency or the timing information of the known cell on the first frequency, to obtain RSRP/RSRQ/an SINR of the cell on the first frequency.

The preset first threshold may be predefined in a standard. For example, a maximum timing error that can be tolerated by RSRP/RSRQ/SINR measurement performance is studied through simulation. In other words, the preset first threshold may be a threshold of synchronization precision at a maximum timing error level.

For example, when the synchronization precision is synchronization at an intra-band CA MRTD level, the preset first threshold may be 3 us (FR1) or 260 ns (FR2).

If the synchronization information further includes the information (3), the UE may measure a plurality of neighboring cells on the first frequency and in the neighboring cell list. If the synchronization information does not include the information (3), the UE needs to measure all cells on the first frequency.

In some embodiments, if the synchronization information includes the information (1) and the information (2), that is, includes the second frequency or the first serving cell, and includes the synchronization precision, where the synchronization precision is less than a preset second threshold, that the terminal device measures the cell on the measurement object based on the synchronization information includes: The UE may determine an index of an SSB of a to-be-measured serving cell on the first frequency based on an index of an SSB of the first serving cell or the known cell on the second frequency (determine the index of the SSB based on a location of a symbol of the detected SSB of the to-be-measured cell in a synchronization information source cell). In this way, SSB index reading time during measurement of the cell on the first frequency can be reduced, to reduce time for measuring the cell on the first frequency.

The preset second threshold may be a threshold of the synchronization precision at the SSB-level.

For example, when the preset second threshold is of the synchronization precision at the SSB level, the preset second threshold may be a length of two SSB symbols.

In some embodiments, if the synchronization information includes the information (1) and the information (2), that is, includes the second frequency or the first serving cell, and includes the synchronization precision, if the synchronization precision is less than or equal to a preset first threshold, that the terminal device measures the cell on the measurement object based on the synchronization information includes: The UE determines timing information of a to-be-measured serving cell on the first frequency based on timing information of the first serving cell or the known cell on the second frequency, to measure the cell on the first frequency. In this way, when measuring the cell on the first frequency, the UE can reduce time for searching for the cell on the first frequency, and directly measure the cell on the first frequency based on timing information of the serving cell on the first frequency or timing information of the known cell on the first frequency, to obtain RSRP/RSRQ/an SINR of the cell on the first frequency.

It should be noted that, based on the foregoing descriptions of the preset first threshold and the preset second threshold, the preset first threshold is less than the preset second threshold, that is, synchronization precision corresponding to the preset first threshold is higher than synchronization precision corresponding to the preset second threshold. Therefore, when the synchronization precision is less than the preset first threshold, the synchronization precision is definitely less than the preset second threshold, so that when cell search time is reduced, SSB index reading time is further reduced.

Therefore, in this embodiment of this application, when a target frequency may be configured, the synchronization information in the configuration information may indicate an assumption of synchronization between inter-MO cells. In this way, when the UE performs inter-frequency measurement, the UE can derive an index of an SSB of a neighboring cell on a non-serving frequency based on an index of an SSB of a serving cell, to reduce SSB index reading time during target frequency measurement. When the synchronization information further indicates precision of an assumption of synchronization between intra-MO or inter-MO cells, if synchronization precision of a network in the cell on the first frequency meets a preset threshold, the UE may determine the timing information of the to-be-measured serving cell on the first frequency based on the timing information of the first serving cell on the second frequency or the known cell on the second frequency during measurement on the first frequency, to reduce the time for searching for the cell on the first frequency. The foregoing describes the communication methods provided in embodiments of this application, and the following describes terminal devices and network devices provided in embodiments of this application.

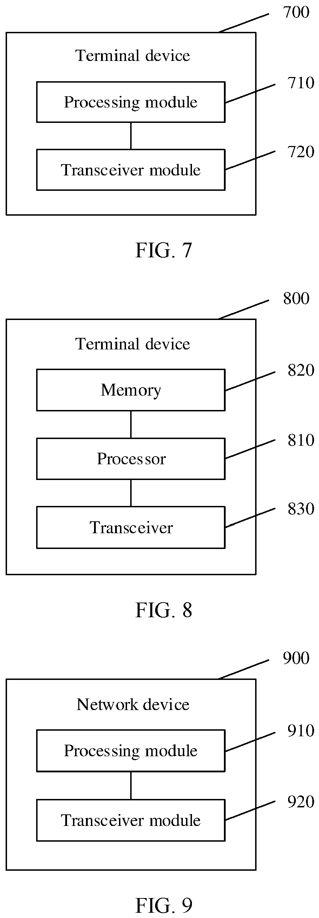

FIG. 7 is a schematic block diagram of a terminal device 700 according to an embodiment of this application. The terminal device 700 may be configured to perform the foregoing cell activation method. The terminal device 700 includes:
a processing module 710, configured to determine a serving cell that can perform information synchronization with a to-be-activated secondary cell SCell, where the serving cell is an activated cell or a known cell.

The processing module 710 is further configured to determine a first SSB in SSBs sent by the to-be-activated SCell, where the first SSB corresponds to a second SSB sent by the serving cell.

The processing module 710 is further configured to activate the to-be-activated SCell based on the first SSB that is sent by the to-be-activated SCell and that is received by a transceiver module 720, and timing information and beam information of the second SSB.

In this embodiment of this application, it is predefined in a standard that information synchronization can be performed between a plurality of serving cells on frequency band FR1 intra-band contiguous carrier aggregation CA. Alternatively, it is predefined in a standard that information synchronization can be performed between a plurality of serving cells belonging to a same timing advance TA group.

In this embodiment of this application, the transceiver module 720 is configured to receive a radio resource control RRC message sent by a network device, where the RRC message indicates that the to-be-activated SCell is a secondary cell of a communication apparatus, the RRC message includes first indication information, and the first indication information indicates the serving cell that can perform information synchronization with the to-be-activated SCell.

In this embodiment of this application, the transceiver module 720 is configured to receive a radio resource control RRC message sent by a network device, where the RRC message includes second indication information, and the second indication information indicates that the to-be-activated SCell can perform information synchronization with a plurality of serving cells that are in a same band or in a same TA group as the to-be-activated SCell.

In this embodiment of this application, the processing module 710 is configured to determine, according to the predefinition in the standard or a network indication, the first SSB in the SSBs sent by the to-be-activated SCell. The first SSB corresponds to the second SSB in the serving cell. When the first SSB corresponds to the second SSB, the first SSB and the second SSB have a same transmit beam.

In this embodiment of this application, it is predefined in the standard that serving cells in a same band have a same SSB pattern. Alternatively, it is predefined in the standard that serving cells that can perform information synchronization have a same SSB pattern. That two serving cells have a same SSB pattern is that the two serving cells send SSBs with a same identifier.

The processing module 710 is configured to determine, according to the predefinition in the standard, that the first SSB is an SSB whose identifier is the same as an identifier of the second SSB.

In this embodiment of this application, the transceiver module 720 is configured to receive third indication information sent by a network device.

The third indication information indicates an identifier of the first SSB sent by the to-be-activated SCell, and a transmit beam of the first SSB is the same as a transmit beam of the second SSB sent by the serving cell.

Alternatively, the third indication information indicates a correspondence between an SSB sent by the to-be-activated SCell and an SSB sent by the serving cell, so that a communication apparatus determines an identifier of the first SSB based on the correspondence and an identifier of the second SSB.

In this embodiment of this application, the processing module 710 is configured to: determine timing information of the first SSB based on the timing information of the second SSB; and determine beam information of the first SSB based on the beam information of the second SSB. The transceiver module 720 is configured to: receive, based on the timing information and the beam information of the first SSB, the first SSB sent by the to-be-activated SCell, and activate the to-be-activated SCell.

In this embodiment of this application, the information synchronization includes that serving cells are co-located and time synchronized and have a same transmit beam on a same symbol.

Therefore, regardless of whether SSB patterns actually used in the serving cells are the same, the UE may always determine the first SSB, in the to-be-activated SCell, corresponding to the second SSB having an optimal transmit beam in SSBs of the serving cell, to reduce cell search and beam measurement time in a cell activation process, and implement quick cell activation.

In some other embodiments, the terminal device in this application is further configured to perform a cell measurement method. In this case:

The transceiver module 720 is configured to receive configuration information sent by a network device, where the configuration information is for configuring a measurement object, the measurement object is a first frequency, the configuration information includes synchronization information, and the synchronization information includes at least one of a second frequency that has a synchronization relationship with the measurement object, a first serving cell on the second frequency, synchronization precision of the measurement object, or a neighboring cell list.

The processing module 710 is configured to measure a cell on the measurement object based on the synchronization information.

In some embodiments, if the synchronization information includes the synchronization precision, the processing module 710 is configured to:
if the synchronization precision is less than or equal to a preset first threshold, measure the cell on the first frequency based on timing information of a serving cell on the first frequency or timing information of a known cell on the first frequency.

In some embodiments, if the synchronization information includes the synchronization precision and the neighboring cell list, the processing module 710 is configured to: if the synchronization precision is less than or equal to a preset first threshold, measure, by a communication apparatus, a plurality of neighboring cells on the first frequency and in the neighboring cell list based on timing information of a serving cell on the first frequency or timing information of a known cell on the first frequency.

In some embodiments, if the synchronization information includes the second frequency or the first serving cell and includes the synchronization precision, where the synchronization precision is less than a preset second threshold, the processing module 710 is configured to determine an identifier of an SSB of a to-be-measured serving cell on the first frequency based on an identifier of an SSB of the first serving cell or a known cell on the second frequency.

In some embodiments, if the synchronization information includes the second frequency or the first serving cell and includes the synchronization precision, where the synchronization precision is less than or equal to a preset first threshold, the processing module 710 is configured to determine timing information of a to-be-measured serving cell on the first frequency based on timing information of the first serving cell or a known cell on the second frequency, to measure the cell on the first frequency.

Therefore, in this embodiment of this application, when a target frequency may be configured, the synchronization information in the configuration information may indicate an assumption of synchronization between inter-MO cells. In this way, when the UE performs inter-frequency measurement, the UE can derive an index of an SSB of a neighboring cell on a non-serving frequency based on an index of an SSB of a serving cell, to reduce SSB index reading time during target frequency measurement. When the synchronization information further indicates precision of an assumption of synchronization between intra-MO or inter-MO cells, if synchronization precision of a network in the cell on the first frequency meets a preset threshold, the UE may determine the timing information of the to-be-measured serving cell on the first frequency based on the timing information of the first serving cell on the second frequency or the known cell on the second frequency during measurement on the first frequency, to reduce time for searching for the cell on the first frequency.

It should be understood that the processing module 710 in this embodiment of this application may be implemented by a processor or a processor-related circuit component, and the transceiver module 720 may be implemented by a transceiver or a transceiver-related circuit component.

As shown in FIG. 8, an embodiment of this application further provides a terminal device 800. The terminal device 800 includes a processor 810, a memory 820, and a transceiver 830. The memory 820 stores instructions or a program. The processor 810 is configured to execute the instructions or the program stored in the memory 820. When the instructions or the program stored in the memory 820 is executed, the processor 810 is configured to perform an operation performed by the processing module 710 in the foregoing embodiment, and the transceiver 830 is configured to perform an operation performed by the transceiver module 720 in the foregoing embodiment.

It should be understood that the terminal device 700 or the terminal device 800 according to embodiments of this application may correspond to the terminal device in the method embodiments in embodiments of this application, and operations and/or functions of the modules in the terminal device 700 or the terminal device 800 are separately used to implement corresponding procedures of the methods in FIG. 3 to FIG. 6. For brevity, details are not described herein again.

FIG. 9 is a block diagram of a structure of a network device 900 according to an embodiment of this application. When the network device 900 is configured to activate a cell, the network device 900 includes:
a processing module 910, configured to determine a serving cell that can perform information synchronization with a to-be-activated secondary cell SCell; and
a transceiver module 920, configured to indicate, to a communication apparatus, the serving cell that can perform information synchronization with the to-be-activated secondary cell SCell, where the serving cell is an activated cell or a known cell.

The transceiver module 920 is further configured to send a first SSB to the communication apparatus, where the first SSB corresponds to a second SSB sent by the serving cell.

In this embodiment of this application, the transceiver module 920 may be configured to send a radio resource control RRC message to the communication apparatus, where the RRC message indicates that the to-be-activated SCell is a secondary cell of the communication apparatus, the RRC message includes first indication information, and the first indication information indicates the serving cell that can perform information synchronization with the to-be-activated SCell.

In this embodiment of this application, the transceiver module 920 may be configured to send a radio resource control RRC message to the communication apparatus, where the RRC message includes second indication information, and the second indication information indicates that the to-be-activated SCell can perform information synchronization with a plurality of serving cells that are in a same band or in a same TA group as the to-be-activated SCell.

In this embodiment of this application, the transceiver module 920 may be configured to: before the network device sends the first SSB to the communication apparatus, indicate, to the communication apparatus, the first SSB in SSBs sent by the to-be-activated SCell. The first SSB corresponds to the second SSB in the serving cell. When the first SSB corresponds to the second SSB, the first SSB and the second SSB have a same transmit beam.

In this embodiment of this application, the transceiver module 920 may be configured to send third indication information to the communication apparatus.

The third indication information indicates an identifier of the first SSB sent by the to-be-activated SCell, and a transmit beam of the first SSB is the same as a transmit beam of the second SSB sent by the serving cell.

Alternatively, the third indication information indicates a correspondence between an SSB sent by the to-be-activated SCell and an SSB sent by the serving cell, so that the communication apparatus determines an identifier of the first SSB based on the correspondence and an identifier of the second SSB.

The information synchronization includes that serving cells are co-located and time synchronized and have a same transmit beam on a same symbol.

In some other embodiments, when the network device 900 is configured to measure a cell,
the processing module 910 is configured to determine configuration information to be sent to a communication apparatus.

The transceiver module 920 is configured to send the configuration information to the communication apparatus.

The configuration information is for configuring a measurement object, the measurement object is a first frequency, the configuration information includes synchronization information, and the synchronization information includes at least one of a second frequency that has a synchronization relationship with the measurement object, a first serving cell on the second frequency, synchronization precision of the measurement object, or a neighboring cell list.

For beneficial effects on the network device side, refer to descriptions on the terminal device side. Details are not described herein again.

It should be understood that the processing module 910 in this embodiment of this application may be implemented by a processor or a processor-related circuit component, and the transceiver module 920 may be implemented by a transceiver or a transceiver-related circuit component.

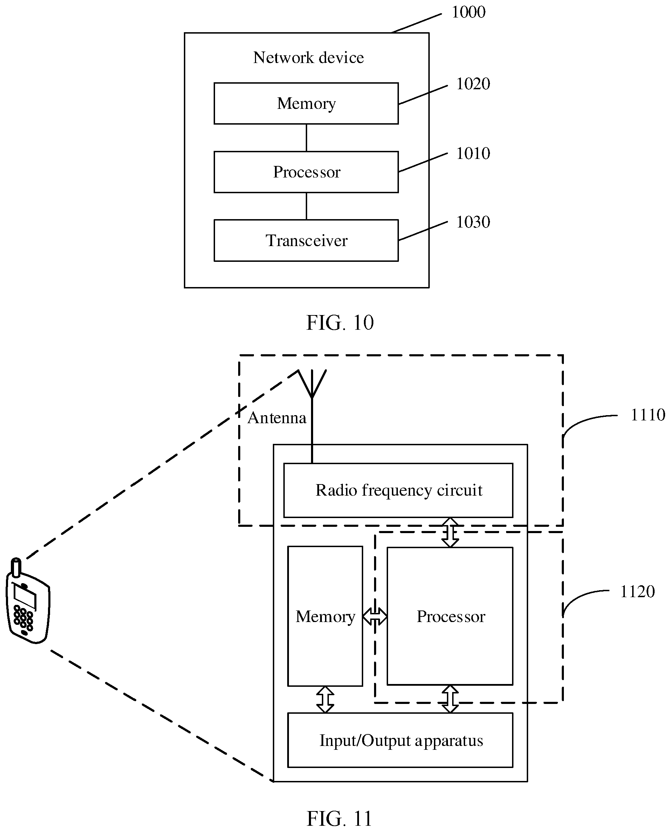

As shown in FIG. 10, an embodiment of this application further provides a network device 1000. The network device 1000 includes a processor 1010, a memory 1020, and a transceiver 1030. The memory 1020 stores instructions or a program. The processor 1010 is configured to execute the instructions or the program stored in the memory 1020. When the instructions or the program stored in the memory 1020 is executed, the processor 1010 is configured to perform an operation performed by the processing module 910 in the foregoing embodiment, and the transceiver 1030 is configured to perform an operation performed by the transceiver module 920 in the foregoing embodiment.

It should be understood that the network device 900 or the network device 1000 according to embodiments of this application may correspond to the network device in the communication method in embodiments of this application, and operations and/or functions of the modules in the network device 900 or the network device 1000 are separately used to implement corresponding procedures of the methods in FIG. 3 to FIG. 6. For brevity, details are not described herein again.

An embodiment of this application further provides a computer-readable storage medium. The computer-readable storage medium stores a computer program. When the program is executed by a processor, a procedure related to the terminal device in the communication method provided in the foregoing method embodiments may be implemented.

An embodiment of the present invention further provides a computer-readable storage medium. The computer-readable storage medium stores a computer program. When the program is executed by a processor, a procedure related to the network device in the communication method provided in the foregoing method embodiments may be implemented.

An embodiment of this application further provides a communication apparatus. The communication apparatus may be a terminal device or a circuit. The communication apparatus may be configured to perform an action performed by the terminal device in the foregoing method embodiments.

When the communication apparatus is the terminal device, FIG. 11 is a simplified schematic diagram of a structure of the terminal device. For ease of understanding and ease of illustration, in FIG. 11, an example in which the terminal device is a mobile phone is used. As shown in FIG. 11, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver unit of the terminal device, and the processor that has a processing function may be considered as a processing unit of the terminal device. As shown in FIG. 11, the terminal device includes a transceiver unit 1110 and a processing unit 1120. The transceiver unit may also be referred to as a transceiver, a transceiving device, a transceiver apparatus, or the like. The processing unit may also be referred to as a processor, a processing board, a processing module, a processing apparatus, or the like. Optionally, a component that is in the transceiver unit 1110 and that is configured to implement a receiving function may be considered as a receiving unit, and a component that is in the transceiver unit 1110 and that is configured to implement a sending function may be considered as a sending unit. That is, the transceiver unit 1110 includes the receiving unit and the sending unit. The transceiver unit sometimes may also be referred to as a transceiver, a transceiving device, a transceiver circuit, or the like. The receiving unit sometimes may also be referred to as a receiver, a receiver, a receive circuit, or the like. The sending unit sometimes may also be referred to as a transmitter, a transmitting device, a transmit circuit, or the like.

It should be understood that the transceiver unit 1110 is configured to perform a sending operation and a receiving operation on the terminal device side in the foregoing method embodiments, and the processing unit 1120 is configured to perform an operation other than the sending operation and the receiving operation of the terminal device in the foregoing method embodiments.

For example, in an implementation, the transceiver unit 1110 is configured to perform a receiving operation on the terminal device side in step 304 in FIG. 3, and/or the transceiver unit 1110 is further configured to perform another receiving and sending step on the terminal device side in embodiments of this application. The processing unit 1120 is configured to perform steps 302 and 303 in FIG. 3, and/or the processing unit 1120 is further configured to perform another processing step on the terminal device side in embodiments of this application.

For another example, in another implementation, the transceiver unit 1110 is configured to perform step 601 in FIG. 6, and/or the transceiver unit 1110 is further configured to perform another receiving and sending step on the terminal device side in embodiments of this application. The processing unit 1120 is configured to perform step 602 in FIG. 6, and/or the processing unit 1120 is further configured to perform another processing step on the terminal device side in embodiments of this application.

When the communication apparatus is a chip apparatus or circuit, the chip apparatus may include a transceiver unit and a processing unit. The transceiver unit may be an input/output circuit and/or a communication interface. The processing unit is a processor, a microprocessor, or an integrated circuit integrated on the chip.

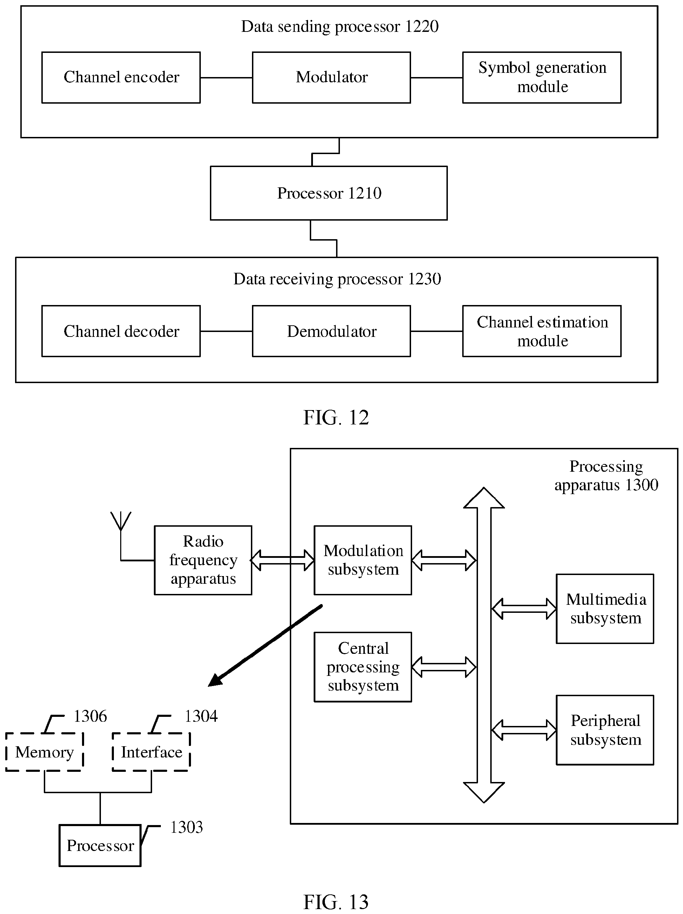

When the communication apparatus in this embodiment is the terminal device, refer to a device shown in FIG. 12. For example, the device may implement a function similar to that of the processor 810 in FIG. 8. In FIG. 12, the device includes a processor 1210, a data sending processor 1220, and a data receiving processor 1230. The processing module 710 in the foregoing embodiment may be the processor 1210 in FIG. 12, and implements a corresponding function. The transceiver module 720 in the foregoing embodiment may be the data sending processor 1220 and/or the data receiving processor 1230 in FIG. 12. Although FIG. 12 shows a channel encoder, a channel decoder, a modulator, a demodulator, a symbol generation module, and a channel estimation module, it may be understood that these modules are merely examples, and do not constitute a limitation on this embodiment.

FIG. 13 shows another form of this embodiment. A processing apparatus 1300 includes modules such as a modulation subsystem, a central processing subsystem, a peripheral subsystem, and a multimedia subsystem. A communication apparatus in this embodiment may be used as the modulation subsystem in the processing apparatus 1300, and may communicate with a radio frequency apparatus. Specifically, the modulation subsystem may include a processor 1303 and an interface 1304. The processor 1303 implements a function of the processing module 710, and the interface 1304 implements a function of the transceiver module 720. In another variation, the modulation subsystem includes a memory 1306, a processor 1303, and a program that is stored in the memory 1306 and that can be run on the processor. When executing the program, the processor 1303 implements the method on the terminal device side in the foregoing method embodiments. It should be noted that the memory 1306 may be a non-volatile memory or a volatile memory. The memory 1306 may be located in the modulation subsystem, or may be located in the processing apparatus 1300, provided that the memory 1306 can be connected to the processor 1303.

In another form of this embodiment, a computer-readable storage medium is provided. The computer-readable storage medium stores instructions. When the instructions are executed, the method on the terminal device side in the foregoing method embodiments is performed.

In another form of this embodiment, a computer program product including instructions is provided. When the instructions are executed, the method on the terminal device side in the foregoing method embodiments is performed.

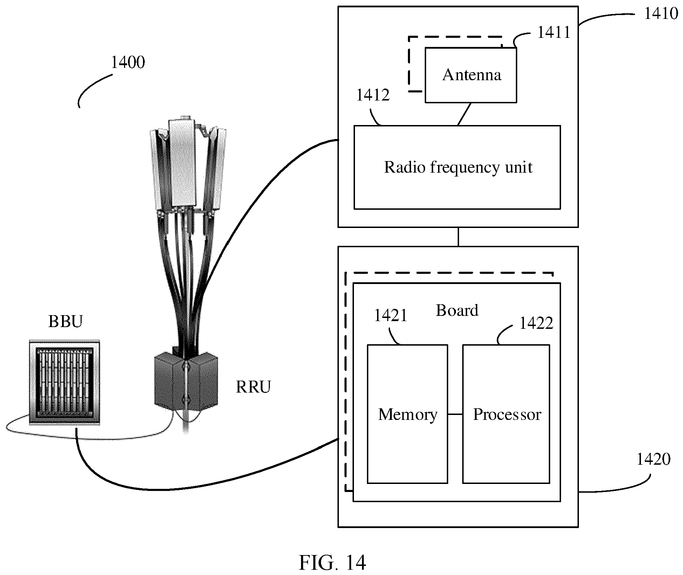

When the apparatus in this embodiment is a network device, the network device may be shown in FIG. 14. An apparatus 1400 includes one or more radio frequency units, such as a remote radio unit (remote radio unit, RRU) 1410 and one or more baseband units (baseband units, BBUs) (which may also be referred to as digital units, digital units, DUs) 1420. The RRU 1410 may be referred to as a transceiver module, and corresponds to the transceiver module 920 in FIG. 9. Optionally, the transceiver module may also be referred to as a transceiver, a transceiver circuit, a transceiving device, or the like. The transceiver module may include at least one antenna 1411 and a radio frequency unit 1412. The RRU 1410 is mainly configured to: receive and send a radio frequency signal, and perform conversion between a radio frequency signal and a baseband signal, for example, send indication information to a terminal device. The BBU 1420 is mainly configured to perform baseband processing, control a base station, and the like. The RRU 1410 and the BBU 1420 may be physically disposed together, or may be physically disposed separately, that is, in a distributed base station.

The BBU 1420 is a control center of the base station, and may also be referred to as a processing module. The BBU 1420 may correspond to the processing module 910 in FIG. 9, and is mainly configured to implement a baseband processing function such as channel coding, multiplexing, modulation, or spreading. For example, the BBU (the processing module) may be configured to control the base station to perform an operation procedure related to the network device in the foregoing method embodiments, for example, generate the foregoing indication information.

In an example, the BBU 1420 may include one or more boards, and a plurality of boards may jointly support a radio access network (such as an LTE network) of a single access standard, or may separately support radio access networks (such as an LTE network, a 5G network, or another network) of different access standards. The BBU 1420 further includes a memory 1421 and a processor 1422. The memory 1421 is configured to store necessary instructions and data. The processor 1422 is configured to control the base station to perform a necessary action, for example, configured to control the base station to perform an operation procedure related to the network device in the foregoing method embodiments. The memory 1421 and the processor 1422 may serve the one or more boards. In other words, a memory and a processor may be disposed on each board. Alternatively, a plurality of boards may share a same memory and a same processor. In addition, a necessary circuit may further be disposed on each board.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, the apparatus, and the method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell activation method, comprising:
determining, by a communication apparatus, a serving cell that can perform information synchronization with a to-be-activated secondary cell SCell, wherein the serving cell is an activated cell or a known cell;
determining, by the communication apparatus, a first SSB in SSBs sent by the to-be-activated SCell, wherein the first SSB corresponds to a second SSB sent by the serving cell; and
activating, by the communication apparatus, the to-be-activated SCell based on the first SSB sent by the to-be-activated SCell and timing information and beam information of the second SSB.

2. The method according to claim 1, wherein the determining, by a communication apparatus, a serving cell that can perform information synchronization with a to-be-activated secondary cell SCell comprises:
determining, by the communication apparatus, that a serving cell that is on same frequency band FR1 intra-band contiguous carrier aggregation CA as the to-be-activated SCell is the serving cell that can perform information synchronization with the to-be-activated SCell; or
determining, by the communication apparatus, that a serving cell belonging to a same timing advance TA group as the to-be-activated SCell is the serving cell that can perform information synchronization with the to-be-activated SCell.

3. The method according to claim 1, wherein the determining, by a communication apparatus, a serving cell that can perform information synchronization with a to-be-activated secondary cell SCell comprises:
receiving, by the communication apparatus, a radio resource control RRC message sent by a network device, wherein the RRC message indicates that the to-be-activated SCell is a secondary cell of the communication apparatus, the RRC message comprises first indication information, and the first indication information indicates the serving cell that can perform information synchronization with the to-be-activated SCell.

4. The method according to claim 1, wherein the determining, by a communication apparatus, a serving cell that can perform information synchronization with a to-be-activated secondary cell SCell comprises:
receiving, by the communication apparatus, a radio resource control RRC message sent by a network device, wherein the RRC message comprises second indication information, and the second indication information indicates that the to-be-activated SCell can perform information synchronization with a plurality of serving cells that are in a same band or in a same TA group as the to-be-activated SCell.

5. The method according to claim 1, wherein the determining, by the communication apparatus, a first SSB in SSBs sent by the to-be-activated SCell, wherein the first SSB corresponds to a second SSB sent by the serving cell comprises:
determining, by the communication apparatus, that the first SSB in the SSBs sent by the to-be-activated SCell is an SSB whose identifier is the same as an identifier of the second SSB, wherein
the first SSB and the second SSB have a same transmit beam.

6. The method according to claim 5, wherein when the to-be-activated SCell and the serving cell are serving cells in a same band, the to-be-activated SCell and the serving cell have a same SSB pattern; or
when the serving cell can perform information synchronization with the to-be-activated SCell, the to-be-activated SCell and the serving cell have a same SSB pattern, wherein
that the two serving cells have the same SSB pattern is that the two serving cells send SSBs with a same identifier.

7. The method according to claim 1, wherein the determining, by the communication apparatus, a first SSB in SSBs sent by the to-be-activated SCell, wherein the first SSB corresponds to a second SSB sent by the serving cell comprises:
receiving, by the communication apparatus, third indication information sent by a network device, wherein
the third indication information indicates an identifier of the first SSB sent by the to-be-activated SCell, and a transmit beam of the first SSB is the same as a transmit beam of the second SSB sent by the serving cell; or
the third indication information indicates a correspondence between an SSB sent by the to-be-activated SCell and an SSB sent by the serving cell, so that the communication apparatus determines an identifier of the first SSB based on the correspondence and an identifier of the second SSB.

8. The method according to claim 1, wherein the activating, by the communication apparatus, the to-be-activated SCell based on the first SSB sent by the to-be-activated SCell and timing information and beam information of the second SSB comprises:
determining, by the communication apparatus, timing information of the first SSB based on the timing information of the second SSB;
determining, by the communication apparatus, beam information of the first SSB based on the beam information of the second SSB; and
receiving, by the communication apparatus based on the timing information and the beam information of the first SSB, the first SSB sent by the to-be-activated SCell, and activating the to-be-activated SCell.

9. The method according to claim 1, wherein the information synchronization comprises that serving cells are co-located and time synchronized and have a same transmit beam on a same symbol.

10. A cell activation method, comprising:
indicating, by a network device to a communication apparatus, a serving cell that can perform information synchronization with a to-be-activated secondary cell SCell, wherein the serving cell is an activated cell or a known cell; and/or indicating, by the network device, the communication apparatus to determine a first SSB in SSBs sent by the to-be-activated SCell, wherein the first SSB corresponds to a second SSB in the serving cell; and
sending, by the network device, the first SSB and the second SSB to the communication apparatus.

11. The method according to claim 10, wherein the indicating, by a network device to a communication apparatus, a serving cell that can perform information synchronization with a to-be-activated secondary cell SCell comprises:
sending, by the network device, a radio resource control RRC message to the communication apparatus, wherein the RRC message indicates that the to-be-activated SCell is a secondary cell of the communication apparatus, the RRC message comprises first indication information, and the first indication information indicates the serving cell that can perform information synchronization with the to-be-activated SCell.

12. The method according to claim 10, wherein the indicating, by a network device to a communication apparatus, a serving cell that can perform information synchronization with a to-be-activated secondary cell SCell comprises:
sending, by the network device, a radio resource control RRC message to the communication apparatus, wherein the RRC message comprises second indication information, and the second indication information indicates that the to-be-activated SCell can perform information synchronization with a plurality of serving cells that are in a same band or in a same TA group as the to-be-activated SCell.

13. The method according to claim 10, wherein the indicating, by the network device, the communication apparatus to determine a first SSB in SSBs sent by the to-be-activated SCell comprises:
sending, by the network device, third indication information to the communication apparatus, wherein
the third indication information indicates an identifier of the first SSB sent by the to-be-activated SCell, and a transmit beam of the first SSB is the same as a transmit beam of the second SSB sent by the serving cell; or
the third indication information indicates a correspondence between an SSB sent by the to-be-activated SCell and an SSB sent by the serving cell, so that the communication apparatus determines an identifier of the first SSB based on the correspondence and an identifier of the second SSB.

14. The method according to claim 10, wherein the information synchronization comprises that serving cells are co-located and time synchronized and have a same transmit beam on a same symbol.

15. A communication apparatus, comprising:
a processing module, configured to: determine a serving cell that can perform information synchronization with a to-be-activated secondary cell SCell, wherein the serving cell is an activated cell or a known cell; wherein
the processing module is further configured to determine a first SSB in SSBs sent by the to-be-activated SCell, wherein the first SSB corresponds to a second SSB sent by the serving cell; and
a transceiver module, further configured to: receive the first SSB from the to-be-activated SCell based on timing information and beam information of the second SSB, and activate the to-be-activated SCell.

16. The communication apparatus according to claim 15, wherein the processing module is configured to:
determine that a serving cell that is on same frequency band FR1 intra-band contiguous carrier aggregation CA as the to-be-activated SCell is the serving cell that can perform information synchronization with the to-be-activated SCell; or
determine that a serving cell belonging to a same timing advance TA group as the to-be-activated SCell is the serving cell that can perform information synchronization with the to-be-activated SCell.

17. The communication apparatus according to claim 15, wherein the transceiver module is configured to:
receive a radio resource control RRC message sent by a network device, wherein the RRC message indicates that the to-be-activated SCell is a secondary cell of the communication apparatus, the RRC message comprises first indication information, and the first indication information indicates the serving cell that can perform information synchronization with the to-be-activated SCell.

18. The communication apparatus according to claim 15, wherein the transceiver module is configured to:
receive a radio resource control RRC message sent by a network device, wherein the RRC message comprises second indication information, and the second indication information indicates that the to-be-activated SCell can perform information synchronization with a plurality of serving cells that are in a same band or in a same TA group as the to-be-activated SCell.

19. The communication apparatus according to claim 15, wherein the processing module is configured to:
determine that the first SSB in the SSBs sent by the to-be-activated SCell is an SSB whose identifier is the same as an identifier of the second SSB, wherein
the first SSB and the second SSB have a same transmit beam.

20. The communication apparatus according to claim 19, wherein when the to-be-activated SCell and the serving cell are serving cells in a same band, the to-be-activated SCell and the serving cell have a same SSB pattern; or
when the serving cell can perform information synchronization with the to-be-activated SCell, the to-be-activated SCell and the serving cell have a same SSB pattern, wherein
that the two serving cells have the same SSB pattern is that the two serving cells send SSBs with a same identifier.

21. The communication apparatus according to claim 15, wherein the transceiver module is configured to:
receive third indication information sent by a network device, wherein
the third indication information indicates an identifier of the first SSB sent by the to-be-activated SCell, and a transmit beam of the first SSB is the same as a transmit beam of the second SSB sent by the serving cell; or
the third indication information indicates a correspondence between an SSB sent by the to-be-activated SCell and an SSB sent by the serving cell, so that the communication apparatus determines an identifier of the first SSB based on the correspondence and an identifier of the second SSB.

22. The communication apparatus according to claim 15, wherein the processing module is configured to: determine timing information of the first SSB based on the timing information of the second SSB, and determine beam information of the first SSB based on the beam information of the second SSB; and
the transceiver module is configured to: receive, based on the timing information and the beam information of the first SSB, the first SSB sent by the to-be-activated SCell, and activate the to-be-activated SCell.

23. The communication apparatus according to claim 15, wherein the information synchronization comprises that serving cells are co-located and time synchronized and have a same transmit beam on a same symbol.

24. A network device, comprising:
a transceiver module, configured to: indicate, to a communication apparatus, a serving cell that can perform information synchronization with a to-be-activated secondary cell SCell, wherein the serving cell is an activated cell or a known cell; and/or indicate the communication apparatus to determine a first SSB in SSBs sent by the to-be-activated SCell, wherein the first SSB corresponds to a second SSB in the serving cell; wherein
the transceiver module is further configured to send the first SSB and the second SSB to the communication apparatus.

25. The network device according to claim 24, wherein the transceiver module is configured to:
send a radio resource control RRC message to the communication apparatus, wherein the RRC message indicates that the to-be-activated SCell is a secondary cell of the communication apparatus, the RRC message comprises first indication information, and the first indication information indicates the serving cell that can perform information synchronization with the to-be-activated SCell.

26. The network device according to claim 24, wherein the transceiver module is configured to:
send a radio resource control RRC message to the communication apparatus, wherein the RRC message comprises second indication information, and the second indication information indicates that the to-be-activated SCell can perform information synchronization with a plurality of serving cells that are in a same band or in a same TA group as the to-be-activated SCell.

27. The network device according to claim 24, wherein the transceiver module is configured to:
send third indication information to the communication apparatus, wherein
the third indication information indicates an identifier of the first SSB sent by the to-be-activated SCell, and a transmit beam of the first SSB is the same as a transmit beam of the second SSB sent by the serving cell; or
the third indication information indicates a correspondence between an SSB sent by the to-be-activated SCell and an SSB sent by the serving cell, so that the communication apparatus determines an identifier of the first SSB based on the correspondence and an identifier of the second SSB.

28. The network device according to claim 24, wherein the information synchronization comprises that serving cells are co-located and time synchronized and have a same transmit beam on a same symbol.

29. A computer-readable storage medium, wherein the computer-readable storage medium stores a computer program; and when the computer program is run, the method according to any one of claims 1 to 9 is implemented.

30. A computer-readable storage medium, wherein the computer-readable storage medium stores a computer program; and when the computer program is run, the method according to any one of claims 10 to 14 is implemented.
